# EUROPEAN PATENT SPECIFICATION

(11) **EP 4 175 260 B1**
(45) Date of publication and mention of the grant of the patent: **05.08.2026**
(21) Application number: 22199010.4
(22) Date of filing: 30.09.2022
(51) Int. Cl.: H04W 4/06, H04W 76/40, H04L 69/24, H04L 69/14, H04W 76/15, H04W 84/12

(54) **MULTILINK DIRECTED MULTICAST SERVICES PROCEDURE**
GERICHTETES MEHRFACHVERBINDUNGS-MULTICAST-DIENSTVERFAHREN
PROCÉDURE DE SERVICES DE MULTIDIFFUSION DIRIGÉE À LIAISONS MULTIPLES

(30) Priority: 01.11.2021 US 202163274159 P
(43) Date of publication of application: 03.05.2023
(73) Proprietor: Intel Corporation, Santa Clara, CA 95054 (US)
(72) Inventor: CARIOU, Laurent, 29290 Milizac (FR)
(74) Representative: Viering, Jentschura & Partner mbB Patent- und Rechtsanwälte

(56) References cited:
- US-A1- 2020 396 568
- "11. MLME 11.1 Synchronization 11.1.1 General", no. D0.4, 19 October 2021 (2021-10-19), pages 1 - 500, XP068186181, Retrieved from the Internet <URL:https://grouper.ieee.org/groups/802/11/private/Draft_Standards/11me/REVme_D0.4.rtf.zip REVme_Cl_11.fm.rtf> [retrieved on 20211019]

## Description

### TECHNICAL FIELD

This disclosure generally relates to systems and methods for wireless communications and, more particularly, to multilink directed multicast services (DMS) procedure.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

The IEEE DRAFT XP068186181 and US 2020/396568 A1 represent relevant prior art in this field.

### BRIEF DESCRIPTION OF THE DRAWINGS

FIG. 1 is a network diagram illustrating an example network environment for multilink directed multicast services, in accordance with one or more example embodiments of the present disclosure.
FIG. 2 illustrates a functional diagram of an exemplary communication station that may be suitable for use as a user device, in accordance with one or more example embodiments of the present disclosure.
FIG. 3 illustrates a block diagram of an example machine upon which any of one or more techniques (e.g., methods) may be performed, in accordance with one or more example embodiments of the present disclosure.
FIG. 4 is a block diagram of a radio architecture in accordance with some examples.
FIG. 5 illustrates an example front-end module circuitry for use in the radio architecture of FIG. 4, in accordance with one or more example embodiments of the present disclosure.
FIG. 6 illustrates an example radio IC circuitry for use in the radio architecture of FIG. 4, in accordance with one or more example embodiments of the present disclosure.
FIG. 7 illustrates an example baseband processing circuitry for use in the radio architecture of FIG. 4, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Multilink operation in 802.11be was defined that allows to operate on client side as a non-AP multi-link device (MLD) that is made of multiple STAs (each operating on a different link) on one the infrastructure side of an AP MLD that is made of multiple APs (each operating on a different link).

This allows us to have a multilink association between the AP MLD and non-AP MLD, and to be able to use one or more links within the established links (setup links) to transmit data, management frames between AP MLD and non-AP MLD.

It was agreed to have a single sequence number space (SN space) for group addressed frames, that are typically delivered by the AP after the delivery traffic indication map (DTIM) target beacon transmission time (TBTT) and that all APs of the same AP MLD shall transmit the group addressed frames on all the links (duplicated on all links). Thanks to that, a STA can receive these frames on one link and it will have all information, and that also allows a STA to switch the link and to continue receiving these group addressed frames.

There is a feature currently in 802.11 that allows to convert group-addressed frames into individually addressed frames for a particular STA after negotiation between the AP and STA. This is called directed multicast services (DMS).

The invention is defined by the subject matter of the appended claims.

Example embodiments of the present disclosure relate to systems, methods, and devices for multilink DMS procedure.

In one or more embodiments, a multilink directed multicast services system may facilitate that DMS procedure for an MLD is performed and applied at the MLD level, instead of being done at the STA level currently in baseline 802.11 specification. That means that negotiation of DMS is done at the MLD level between a non-AP MLD and an AP MLD, and not at the STA level. When DMS is established between 2 MLDs, some or all of group-addressed frames need to be carried as individually addressed frame by the AP MLD to the non-AP MLD. That means that these frames can be transmitted on any link (link on which the non-AP MLD has its affiliated STA in the awake state). DMS Request frames and DMS Response frames, as well as the DMS Request elements and DMS response elements are treated at the MLD level, and can therefore be transmitted on any link of the MLDs and will apply at the MLD level.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

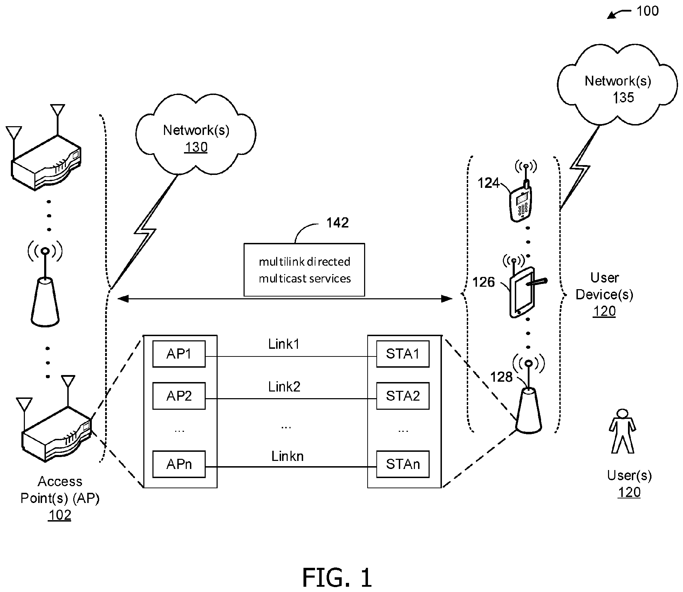

FIG. 1 is a network diagram illustrating an example network environment of multilink directed multicast services, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

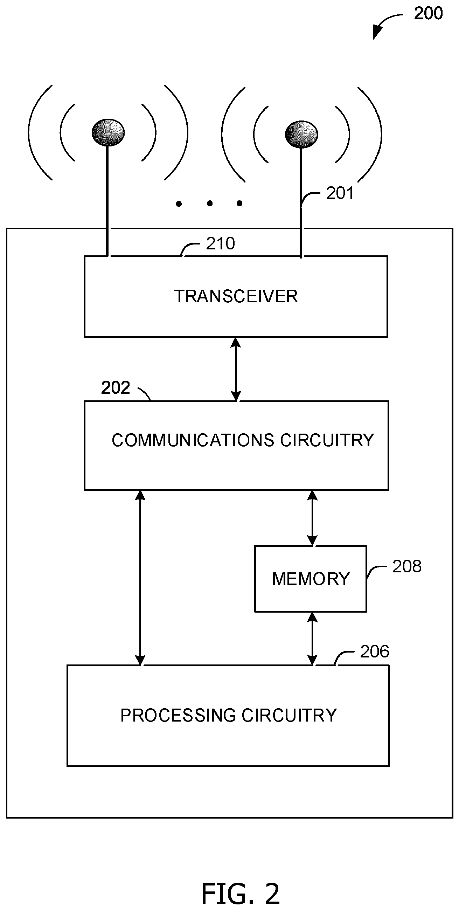

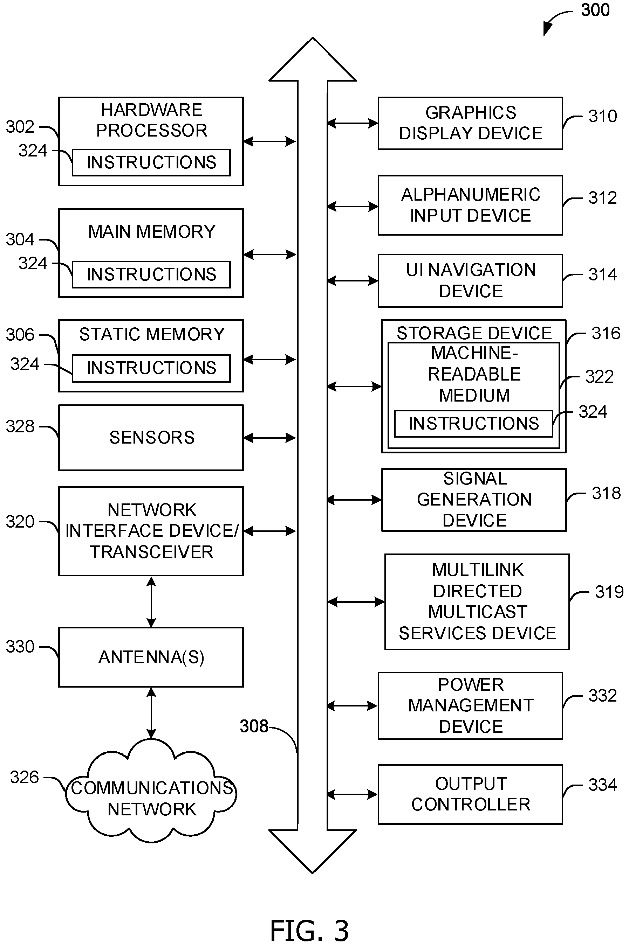

In some embodiments, the user devices 120 and the AP 102 may include one or more computer systems similar to that of the functional diagram of FIG. 2 and/or the example machine/system of FIG. 3.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement a multilink directed multicast services 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Link1, Link2, ..., Linkn) between each of the individual APs and STAs. It is understood that the above descriptions are for purposes of illustration and are not meant to be limiting.

In one or more embodiments, a multilink directed multicast services system may facilitate a multi-link directed multicast services (DMS) procedure.

An MLD that implements DMS may indicate its capability by setting to 1 the DMS field of the Extended Capabilities element that is transmitted by its affiliated STAs. All STAs affiliated with an MLD may advertise the same DMS capability.

For an MLD, DMS is a service that may be provided by an AP.

MLD to associated non-AP MLDs that support DMS, where the AP MLD transmits group addressed MSDUs as individually addressed A-MSDUs.

DMS procedures may be performed at the MLD level by following the procedure defined in 11.21.16.2 (DMS procedures), except that the following shall apply:

The DMS provider may be an AP MLD.

The DMS recipient may be a non-AP MLD that uses DMS.

It is understood that the above descriptions are for purposes of illustration and are not meant to be limiting.

A flow diagram of a process for a multilink directed multicast services system, in accordance with one or more example embodiments of the present disclosure, may include

At a block, a device (e.g., the user device(s) 120 and/or the AP 102 of FIG. 1 and/or the multilink directed multicast services device 319 of FIG. 3) may perform a directed multicast services (DMS) procedure with an multi-link device (MLD).

At a block, the device may apply the MLD procedure at the MLD level instead of an station device (STA) level.

It is understood that the above descriptions are for purposes of illustration and are not meant to be limiting.

FIG. 2 shows a functional diagram of an exemplary communication station 200, in accordance with one or more example embodiments of the present disclosure. In one embodiment, FIG. 2 illustrates a functional block diagram of a communication station that may be suitable for use as an AP 102 (FIG. 1) or a user device 120 (FIG. 1) in accordance with some embodiments. The communication station 200 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 200 may include communications circuitry 202 and a transceiver 210 for transmitting and receiving signals to and from other communication stations using one or more antennas 201. The communications circuitry 202 may include circuitry that can operate the physical layer (PHY) communications and/or medium access control (MAC) communications for controlling access to the wireless medium, and/or any other communications layers for transmitting and receiving signals. The communication station 200 may also include processing circuitry 206 and memory 208 arranged to perform the operations described herein. In some embodiments, the communications circuitry 202 and the processing circuitry 206 may be configured to perform operations detailed in the above figures, diagrams, and flows.

In accordance with some embodiments, the communications circuitry 202 may be arranged to contend for a wireless medium and configure frames or packets for communicating over the wireless medium. The communications circuitry 202 may be arranged to transmit and receive signals. The communications circuitry 202 may also include circuitry for modulation/demodulation, upconversion/downconversion, filtering, amplification, etc. In some embodiments, the processing circuitry 206 of the communication station 200 may include one or more processors. In other embodiments, two or more antennas 201 may be coupled to the communications circuitry 202 arranged for sending and receiving signals. The memory 208 may store information for configuring the processing circuitry 206 to perform operations for configuring and transmitting message frames and performing the various operations described herein. The memory 208 may include any type of memory, including non-transitory memory, for storing information in a form readable by a machine (e.g., a computer). For example, the memory 208 may include a computer-readable storage device, read-only memory (ROM), random-access memory (RAM), magnetic disk storage media, optical storage media, flash-memory devices and other storage devices and media.

In some embodiments, the communication station 200 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 200 may include one or more antennas 201. The antennas 201 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 200 may include one or more of a keyboard, a display, a non-volatile memory port, multiple antennas, a graphics processor, an application processor, speakers, and other mobile device elements. The display may be an LCD screen including a touch screen.

Although the communication station 200 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 200 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 200 may include one or more processors and may be configured with instructions stored on a computer-readable storage device.

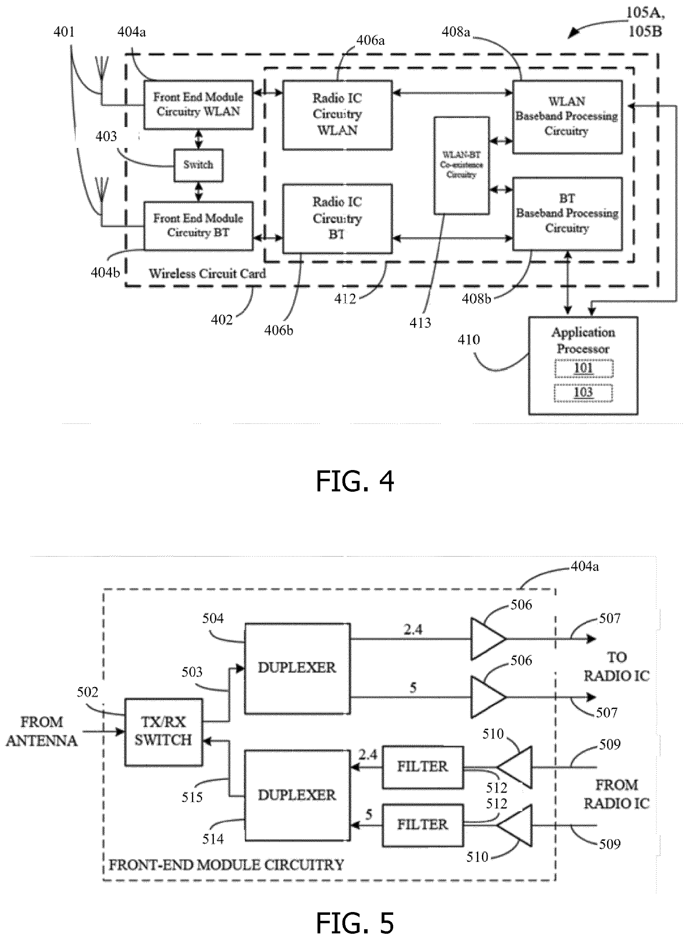

FIG. 4 illustrates a block diagram of an example of a machine 3 00 or system upon which any one or more of the techniques (e.g., methodologies) discussed herein may be performed. In other embodiments, the machine 3 00 may operate as a standalone device or may be connected (e.g., networked) to other machines. In a networked deployment, the machine 300 may operate in the capacity of a server machine, a client machine, or both in server-client network environments. In an example, the machine 300 may act as a peer machine in peer-to-peer (P2P) (or other distributed) network environments. The machine 300 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 300 may include a hardware processor 302 (e.g., a central processing unit (CPU), a graphics processing unit (GPU), a hardware processor core, or any combination thereof), a main memory 304 and a static memory 306, some or all of which may communicate with each other via an interlink (e.g., bus) 308. The machine 3 00 may further include a power management device 3 32, a graphics display device 310, an alphanumeric input device 312 (e.g., a keyboard), and a user interface (UI) navigation device 314 (e.g., a mouse). In an example, the graphics display device 310, alphanumeric input device 3 1 2, and UI navigation device 314 may be a touch screen display. The machine 300 may additionally include a storage device (i.e., drive unit) 316, a signal generation device 3 18 (e.g., a speaker), a multilink directed multicast services device 319, a network interface device/transceiver 320 coupled to antenna(s) 3 30, and one or more sensors 3 28, such as a global positioning system (GPS) sensor, a compass, an accelerometer, or other sensor. The machine 300 may include an output controller 334, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 302 for generation and processing of the baseband signals and for controlling operations of the main memory 304, the storage device 316, and/or the multilink directed multicast services device 319. The baseband processor may be provided on a single radio card, a single chip, or an integrated circuit (IC).

The storage device 3 16 may include a machine readable medium 322 on which is stored one or more sets of data structures or instructions 324 (e.g., software) embodying or utilized by any one or more of the techniques or functions described herein. The instructions 324 may also reside, completely or at least partially, within the main memory 304, within the static memory 306, or within the hardware processor 302 during execution thereof by the machine 300. In an example, one or any combination of the hardware processor 3 02, the main memory 3 04, the static memory 3 06, or the storage device 316 may constitute machine-readable media.

The multilink directed multicast services device 319 may carry out or perform any of the operations and processes (e.g., process of the process for a multilink directed multicast services system) described and shown above.

It is understood that the above are only a subset of what the multilink directed multicast services device 319 may be configured to perform and that other functions included throughout this disclosure may also be performed by the multilink directed multicast services device 319.

While the machine-readable medium 322 is illustrated as a single medium, the term "machine-readable medium" may include a single medium or multiple media (e.g., a centralized or distributed database, and/or associated caches and servers) configured to store the one or more instructions 324.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 300 and that cause the machine 3 00 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 324 may further be transmitted or received over a communications network 326 using a transmission medium via the network interface device/transceiver 320 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 320 may include one or more physical jacks (e.g., Ethernet, coaxial, or phone jacks) or one or more antennas to connect to the communications network 326. In an example, the network interface device/transceiver 320 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 300 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

FIG. 4 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 404a-b, radio IC circuitry 406a-b and baseband processing circuitry 408a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 404a-b may include a WLAN or Wi-Fi FEM circuitry 404a and a Bluetooth (BT) FEM circuitry 404b. The WLAN FEM circuitry 404a may include a receive signal path comprising circuitry configured to operate on WLAN RF signals received from one or more antennas 401, to amplify the received signals and to provide the amplified versions of the received signals to the WLAN radio IC circuitry 406a for further processing. The BT FEM circuitry 404b may include a receive signal path which may include circuitry configured to operate on BT RF signals received from one or more antennas 401, to amplify the received signals and to provide the amplified versions of the received signals to the BT radio IC circuitry 406b for further processing. FEM circuitry 404a may also include a transmit signal path which may include circuitry configured to amplify WLAN signals provided by the radio IC circuitry 406a for wireless transmission by one or more of the antennas 401. In addition, FEM circuitry 404b may also include a transmit signal path which may include circuitry configured to amplify BT signals provided by the radio IC circuitry 406b for wireless transmission by the one or more antennas. In the embodiment of FIG. 4, although FEM 404a and FEM 404b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 406a-b as shown may include WLAN radio IC circuitry 406a and BT radio IC circuitry 406b. The WLAN radio IC circuitry 406a may include a receive signal path which may include circuitry to down-convert WLAN RF signals received from the FEM circuitry 404a and provide baseband signals to WLAN baseband processing circuitry 408a. BT radio IC circuitry 406b may in turn include a receive signal path which may include circuitry to down-convert BT RF signals received from the FEM circuitry 404b and provide baseband signals to BT baseband processing circuitry 408b. WLAN radio IC circuitry 406a may also include a transmit signal path which may include circuitry to up-convert WLAN baseband signals provided by the WLAN baseband processing circuitry 408a and provide WLAN RF output signals to the FEM circuitry 404a for subsequent wireless transmission by the one or more antennas 401. BT radio IC circuitry 406b may also include a transmit signal path which may include circuitry to up-convert BT baseband signals provided by the BT baseband processing circuitry 408b and provide BT RF output signals to the FEM circuitry 404b for subsequent wireless transmission by the one or more antennas 401. In the embodiment of FIG. 4, although radio IC circuitries 406a and 406b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 408a-b may include a WLAN baseband processing circuitry 408a and a BT baseband processing circuitry 408b. The WLAN baseband processing circuitry 408a may include a memory, such as, for example, a set of RAM arrays in a Fast Fourier Transform or Inverse Fast Fourier Transform block (not shown) of the WLAN baseband processing circuitry 408a. Each of the WLAN baseband circuitry 408a and the BT baseband circuitry 408b may further include one or more processors and control logic to process the signals received from the corresponding WLAN or BT receive signal path of the radio IC circuitry 406a-b, and to also generate corresponding WLAN or BT baseband signals for the transmit signal path of the radio IC circuitry 406a-b. Each of the baseband processing circuitries 408a and 408b may further include physical layer (PHY) and medium access control layer (MAC) circuitry, and may further interface with a device for generation and processing of the baseband signals and for controlling operations of the radio IC circuitry 406a-b.

Referring still to FIG. 4, according to the shown embodiment, WLAN-BT coexistence circuitry 413 may include logic providing an interface between the WLAN baseband circuitry 408a and the BT baseband circuitry 408b to enable use cases requiring WLAN and BT coexistence. In addition, a switch 403 may be provided between the WLAN FEM circuitry 404a and the BT FEM circuitry 404b to allow switching between the WLAN and BT radios according to application needs. In addition, although the antennas 401 are depicted as being respectively connected to the WLAN FEM circuitry 404a and the BT FEM circuitry 404b, embodiments include within their scope the sharing of one or more antennas as between the WLAN and BT FEMs, or the provision of more than one antenna connected to each of FEM 404a or 404b.

In some embodiments, the front-end module circuitry 404a-b, the radio IC circuitry 406a-b, and baseband processing circuitry 408a-b may be provided on a single radio card, such as wireless radio card 402. In some other embodiments, the one or more antennas 401, the FEM circuitry 404a-b and the radio IC circuitry 406a-b may be provided on a single radio card. In some other embodiments, the radio IC circuitry 406a-b and the baseband processing circuitry 408a-b may be provided on a single chip or integrated circuit (IC), such as IC 412.

In some embodiments, the wireless radio card 402 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 5, the BT baseband circuitry 408b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 5 illustrates WLAN FEM circuitry 404a in accordance with some embodiments. Although the example of FIG. 5 is described in conjunction with the WLAN FEM circuitry 404a, the example of FIG. 5 may be described in conjunction with the example BT FEM circuitry 404b (FIG. 4), although other circuitry configurations may also be suitable.

In some embodiments, the FEM circuitry 404a may include a TX/RX switch 502 to switch between transmit mode and receive mode operation. The FEM circuitry 404a may include a receive signal path and a transmit signal path. The receive signal path of the FEM circuitry 404a may include a low-noise amplifier (LNA) 506 to amplify received RF signals 503 and provide the amplified received RF signals 507 as an output (e.g., to the radio IC circuitry 406a-b (FIG. 4)). The transmit signal path of the circuitry 404a may include a power amplifier (PA) to amplify input RF signals 509 (e.g., provided by the radio IC circuitry 406a-b), and one or more filters 512, such as band-pass filters (BPFs), low-pass filters (LPFs) or other types of filters, to generate RF signals 515 for subsequent transmission (e.g., by one or more of the antennas 401 (FIG. 4)) via an example duplexer 514.

In some dual-mode embodiments for Wi-Fi communication, the FEM circuitry 404a may be configured to operate in either the 2.4 GHz frequency spectrum or the 5 GHz frequency spectrum. In these embodiments, the receive signal path of the FEM circuitry 404a may include a receive signal path duplexer 504 to separate the signals from each spectrum as well as provide a separate LNA 506 for each spectrum as shown. In these embodiments, the transmit signal path of the FEM circuitry 404a may also include a power amplifier 510 and a filter 512, such as a BPF, an LPF or another type of filter for each frequency spectrum and a transmit signal path duplexer 504 to provide the signals of one of the different spectrums onto a single transmit path for subsequent transmission by the one or more of the antennas 401 (FIG. 4). In some embodiments, BT communications may utilize the 2.4 GHz signal paths and may utilize the same FEM circuitry 404a as the one used for WLAN communications.

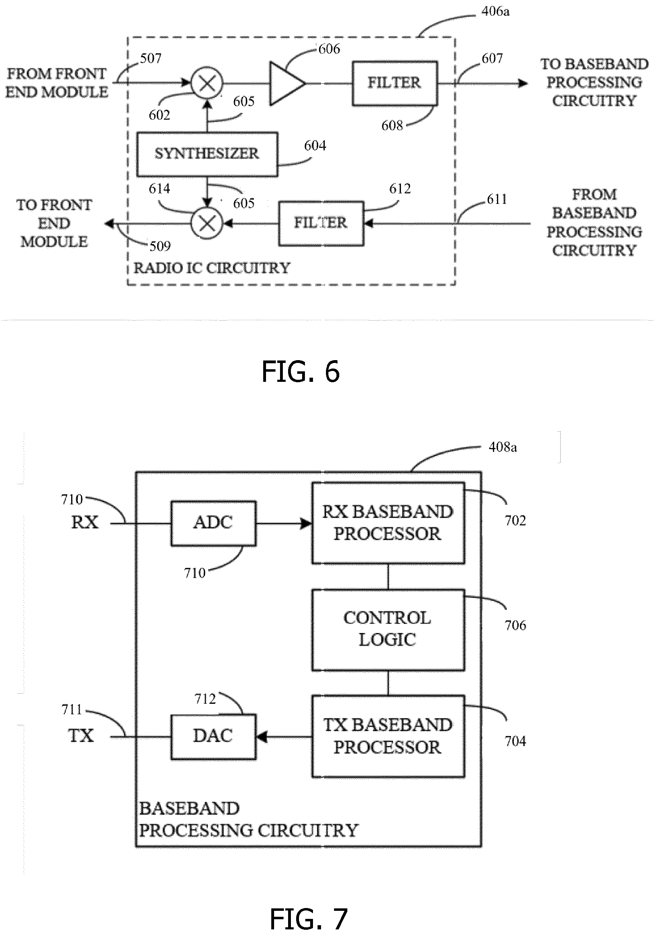

FIG. 6 illustrates radio IC circuitry 406a in accordance with some embodiments. The radio IC circuitry 406a is one example of circuitry that may be suitable for use as the WLAN or BT radio IC circuitry 406a/406b (FIG. 4), although other circuitry configurations may also be suitable. Alternatively, the example of FIG. 6 may be described in conjunction with the example BT radio IC circuitry 406b.

In some embodiments, the radio IC circuitry 406a may include a receive signal path and a transmit signal path. The receive signal path of the radio IC circuitry 406a may include at least mixer circuitry 602, such as, for example, down-conversion mixer circuitry, amplifier circuitry 606 and filter circuitry 608. The transmit signal path of the radio IC circuitry 406a may include at least filter circuitry 612 and mixer circuitry 614, such as, for example, up-conversion mixer circuitry. Radio IC circuitry 406a may also include synthesizer circuitry 604 for synthesizing a frequency 605 for use by the mixer circuitry 602 and the mixer circuitry 614. The mixer circuitry 602 and/or 614 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation.

FIG. 6 illustrates only a simplified version of a radio IC circuitry, and may include, although not shown, embodiments where each of the depicted circuitries may include more than one component. For instance, mixer circuitry 614 may each include one or more mixers, and filter circuitries 608 and/or 612 may each include one or more filters, such as one or more BPFs and/or LPFs according to application needs. For example, when mixer circuitries are of the direct-conversion type, they may each include two or more mixers.

In some embodiments, mixer circuitry 602 may be configured to down-convert RF signals 507 received from the FEM circuitry 404a-b (FIG. 4) based on the synthesized frequency 605 provided by synthesizer circuitry 604. The amplifier circuitry 606 may be configured to amplify the down-converted signals and the filter circuitry 608 may include an LPF configured to remove unwanted signals from the down-converted signals to generate output baseband signals 607. Output baseband signals 607 may be provided to the baseband processing circuitry 408a-b (FIG. 4) for further processing. In some embodiments, the output baseband signals 607 may be zero-frequency baseband signals, although this is not a requirement. In some embodiments, mixer circuitry 602 may comprise passive mixers, although the scope of the embodiments is not limited in this respect.

In some embodiments, the mixer circuitry 614 may be configured to up-convert input baseband signals 611 based on the synthesized frequency 605 provided by the synthesizer circuitry 604 to generate RF output signals 509 for the FEM circuitry 404a-b. The baseband signals 611 may be provided by the baseband processing circuitry 408a-b and may be filtered by filter circuitry 612. The filter circuitry 612 may include an LPF or a BPF, although the scope of the embodiments is not limited in this respect.

In some embodiments, the mixer circuitry 602 and the mixer circuitry 614 may each include two or more mixers and may be arranged for quadrature down-conversion and/or up-conversion respectively with the help of synthesizer 604. In some embodiments, the mixer circuitry 602 and the mixer circuitry 614 may each include two or more mixers each configured for image rejection (e.g., Hartley image rejection). In some embodiments, the mixer circuitry 602 and the mixer circuitry 614 may be arranged for direct down-conversion and/or direct up-conversion, respectively. In some embodiments, the mixer circuitry 602 and the mixer circuitry 614 may be configured for super-heterodyne operation, although this is not a requirement.

Mixer circuitry 602 may comprise, according to one embodiment: quadrature passive mixers (e.g., for the in-phase (I) and quadrature phase (Q) paths). In such an embodiment, RF input signal 507 from FIG. 6 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 605 of synthesizer 604 (FIG. 6). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 507 (FIG. 5) may comprise a balanced signal, although the scope of the embodiments is not limited in this respect. The I and Q baseband output signals may be provided to low-noise amplifier, such as amplifier circuitry 606 (FIG. 6) or to filter circuitry 608 (FIG. 6).

In some embodiments, the output baseband signals 607 and the input baseband signals 611 may be analog baseband signals, although the scope of the embodiments is not limited in this respect. In some alternate embodiments, the output baseband signals 607 and the input baseband signals 611 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 604 may be a fractional-N synthesizer or a fractional N/N+1 synthesizer, although the scope of the embodiments is not limited in this respect as other types of frequency synthesizers may be suitable. For example, synthesizer circuitry 604 may be a delta-sigma synthesizer, a frequency multiplier, or a synthesizer comprising a phase-locked loop with a frequency divider. According to some embodiments, the synthesizer circuitry 604 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 604 may be provided by a voltage controlled oscillator (VCO), although that is not a requirement. A divider control input may further be provided by either the baseband processing circuitry 408a-b (FIG. 4) depending on the desired output frequency 605. In some embodiments, a divider control input (e.g., N) may be determined from a look-up table (e.g., within a Wi-Fi card) based on a channel number and a channel center frequency as determined or indicated by the example application processor 410. The application processor 410 may include, or otherwise be connected to, one of the example secure signal converter 101 or the example received signal converter 103 (e.g., depending on which device the example radio architecture is implemented in).

In some embodiments, synthesizer circuitry 604 may be configured to generate a carrier frequency as the output frequency 605, while in other embodiments, the output frequency 605 may be a fraction of the carrier frequency (e.g., one-half the carrier frequency, one-third the carrier frequency). In some embodiments, the output frequency 605 may be a LO frequency (fLO).

FIG. 7 illustrates a functional block diagram of baseband processing circuitry 408a in accordance with some embodiments. The baseband processing circuitry 408a is one example of circuitry that may be suitable for use as the baseband processing circuitry 408a (FIG. 4), although other circuitry configurations may also be suitable. Alternatively, the example of FIG. 6 may be used to implement the example BT baseband processing circuitry 408b of FIG. 4.

The baseband processing circuitry 408a may include a receive baseband processor (RX BBP) 702 for processing receive baseband signals 609 provided by the radio IC circuitry 406a-b (FIG. 4) and a transmit baseband processor (TX BBP) 704 for generating transmit baseband signals 611 for the radio IC circuitry 406a-b. The baseband processing circuitry 408a may also include control logic 706 for coordinating the operations of the baseband processing circuitry 408a.

In some embodiments (e.g., when analog baseband signals are exchanged between the baseband processing circuitry 408a-b and the radio IC circuitry 406a-b), the baseband processing circuitry 408a may include ADC 710 to convert analog baseband signals 709 received from the radio IC circuitry 406a-b to digital baseband signals for processing by the RX BBP 702. In these embodiments, the baseband processing circuitry 408a may also include DAC 712 to convert digital baseband signals from the TX BBP 704 to analog baseband signals 711.

In some embodiments that communicate OFDM signals or OFDMA signals, such as through baseband processor 408a, the transmit baseband processor 704 may be configured to generate OFDM or OFDMA signals as appropriate for transmission by performing an inverse fast Fourier transform (IFFT). The receive baseband processor 702 may be configured to process received OFDM signals or OFDMA signals by performing an FFT. In some embodiments, the receive baseband processor 702 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 4, in some embodiments, the antennas 401 (FIG. 4) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 401 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device ," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments within the scope defined by the appended claims. It is noted that the subject-matter for which protection is sought is exclusively defined by the appended claims.

Example 1 may include a device comprising processing circuitry coupled to storage, the processing circuitry configured to: perform a directed multicast services (DMS) procedure with an multi-link device (MLD); and apply the DMS procedure at the MLD level instead of an station device (STA) level.

Example 2 may include the device of example 1 and/or some other example herein, wherein performing the DMS procedure comprises negotiation of the DMS procedure with a non-access point (AP) MLD.

Example 3 may include the device of example 1 and/or some other example herein, wherein the MLD indicates its capability by setting a DMS field of an extended capabilities element to 1.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send a frame.

Example 6 may include the device of example 1 and/or some other example herein, wherein performing the DMS procedure comprises advertising the same DMS capability by all STAs affiliated with the MLD.

Example 7 may include the device of example 1 and/or some other example herein, wherein performing the DMS procedure comprises setting the DMS field of the extended capabilities element to 1 for transmission by affiliated STAs of the MLD.

Example 8 may include the device of example 1 and/or some other example herein, wherein performing the DMS procedure comprises a DMS provider that is an AP MLD.

Example 9 may include the device of example 1 and/or some other example herein, wherein performing the DMS procedure comprises a DMS recipient that is a non-AP MLD.

Example 10 may include the device of example 1 and/or some other example herein, wherein performing the DMS procedure comprises a negotiation of DMS at the MLD level between a non-AP MLD and an AP MLD; and wherein the device is one of the non-AP MLD or the AP MLD.

Example 11 may include the device of example 1 and/or some other example herein, wherein performing the DMS procedure comprises transmitting any one of a DMS Request frame, a DMS Response frame, a DMS Request element, a DMS Response element at the MLD level.

Example 12 may include the device of example 1 and/or some other example herein, wherein the device is an AP MLD; wherein performing the DMS procedure comprises, when DMS is established between the device and a non-AP MLD, carrying at least one group addressed frame as an individually addressed frame to the non-AP MLD.

Example 13 may include the device of example 12 and/or some other example herein, wherein performing the DMS procedure comprises transmitting the individually addressed frame to the non-AP MLD on one of plurality of links established between the device and the non-AP MLD.

Example 14 may include the device of example 13 and/or some other example herein, wherein the one of the plurality of links is a link on which the non-AP MLD has its affiliated STA in an awake state.

Example 15 may include the device of examples 1, 12 to 14 and/or some other example herein, wherein performing the DMS procedure comprises transmitting group addressed MSDUs as individually addressed A-MSDUs.

Example 16 may include the device of example 1 and/or some other example herein, wherein the device is a non-AP MLD comprising a plurality of affiliated STAs; wherein performing the DMS procedure comprises advertising the same DMS capability by the plurality of STAs.

Example 17 may include the device of example 1 and/or some other example herein, wherein the device is an AP MLD comprising a plurality of APs; wherein each AP of the plurality of APs is configured to communicate with a STA of a plurality of STAs of a non-AP MLD over a link, wherein one of the plurality of APs is configured to transmit the individually addressed frame over a respective link to a respective STA of a non-AP MLD.

Example 18 may include the device of example 17 and/or some other example herein, wherein the link comprises a link on which the non-AP MLD has the respective STA in an awake state.

Example 19 may include the device of example 18 and/or some other example herein, the one of the plurality of APs is configured to transmit group addressed MSDUs as individually addressed A-MSDUs.

Example 20 may include the device of example 1 and/or some other example herein, wherein the device is an AP MLD configured to operate as a DMS provider and wherein the MLD is a non-AP MLD configured to operate as a DMS recipient.

Example 21 may include the device of example 20, wherein performing the DMS procedure comprises responding, upon a receipt of a DMS Request frame, with a DMS Response frame.

Example 22 may include the device of example 21, wherein the DMR Response frame comprises a matching DMS Status field for each received DMS Descriptor field preserving the order present in the DMS Request frame.

Example 23 may include the device of example 20, wherein performing the DMS procedure comprises responding, upon a receipt of a Reassociation Request frame, with a Reassociation Response frame.

Example 24 may include the device of example 23, wherein the Reassociation Response frame comprises a matching DMS Status field for each received DMS Description field preserving the order present in the Reassociation Request frame.

Example 25 may include the device of example 20, wherein performing the DMS procedure comprises accepting a DMS request identified by a DMS Descriptor, setting a Response Type field of a corresponding DMS Status field in a DMS Response element associated with the DMS Request to "Accept", and assigning a nonzero DMS identifier (DMSID), and .

Example 26 may include the device of example 20, wherein performing the DMS procedure comprises denying a DMS request identified by a DMS Descriptor, setting a Response Type field of a corresponding DMS Status field in a DMS Response element associated with the DMS Request to a Response Type value of "Deny", and setting a DMSID to zero.

Example 27 may include the device of any one of examples 25 or 26, wherein performing the DMS procedure comprises copying traffic classification (TCLAS) Elements, TCLAS Processing Element, traffic specification (TSPEC) Element and Optional Subelements fields of the DMS Request to TCLAS Elements, TCLAS Processing Element, TSPEC Element and Optional Subelements fields of the DMS Status field of the DMS Response element respectively, if the Response Type field is set to "Accept" or "Deny"

Example 28 may include the device of any one of examples 25 to 27, wherein performing the DMS procedure comprises, when a DMS Request comprising a DMS descriptor with a set of TCLAS element and TCLAS Processing elements that are identical irrespective of order to another successfully received DMS request that is not yet terminated is received by one or more STAs, assigning the same DMSID that was assigned to a previous DMS Request.

Example 29 may include the device of example 20, wherein performing the DMS procedure comprises, denying a DMS Request, and suggesting an alternative TCLAS-based classifier by including one or more TCLAS elements and an optional TCLAS Processing element in a DMS Response.

Example 30 may include the device of example 29, wherein performing the DMS procedure comprises including fewer TCLAS elements in the DMS Response corresponding to the DMS Request than TCLAS elements present in the DMS Request.

Example 31 may include the device of example 30, wherein performing the DMS procedure comprises not including the optional TCLAS Processing element if a single TCLAS element is included.

Example 32 may include the device of any one of examples 29 to 31, wherein performing the DMS procedure comprises changing a TCLAS element's Classifier Type field in the DMS Response, and if the device is unable to suggest a value for a Classifier Mask field, setting the Classifier Mask field to 0.

Example 32 may include the device of any one of examples 29 to 32, wherein performing the DMS procedure comprises changing a TCLAS element's Classifier Type field in a DMS Response element of the DMS Response, and if the device is unable to suggest values for one or more Classifier Parameter subfields, setting the one or more Classifier subfields to 0.

Example 33 may include the device of any one of examples 20 to 33, wherein performing the DMS procedure comprises changing a TCLAS element's Classifier Mask field in a DMS Response element of the DMS Response, and if the device is unable to suggest values for one or more Classifier Parameter subfields, setting the one or more Classifier subfields to 0.

Example 34 may include the device of example 33, wherein performing the DMS procedure comprises sending a DMS Response frame comprising a modified TCLAS element comprising a Classifier Mask field equal to 0.

Example 35 may include the device of any one of examples 33 or 34, wherein performing the DMS procedure comprises sending a DMS Response frame comprising one or more Classifier Parameter subfields equal to 0.

Example 36 may include the device of example 20, wherein performing the DMS procedure comprises accepting a DMS Request, and if the DMS Request is accepted, sending subsequent group addressed MSDUs that match a frame classifier specified in DMS Descriptors to the non-AP MLD as A-MSDU subframes within an individually addressed A-MSDU frame.

Example 37 may include the device of example 20, wherein performing the DMS procedure comprises accepting a DMS Request, and if the DMS Request is accepted, sending subsequent group addressed MSDUs that match a frame classifier specified in DMS Descriptors to the requesting STA as A-MSDU subframes within an individually addressed A-MSDU frame.

Example 38 may include the device of any one of examples 36 or 37, wherein the A-MSDU comprises A-MSDU subframe headers' destination address set to a multicast address for the corresponding MSDUs.

Example 39 may include the device of example 38, wherein performing the DMS procedure comprises continuing to transmit matching frames as group addressed frames if at least one associated STA has not requested a DMS for the matching frames.

Example 40 may include the device of example 20, wherein performing the DMS procedure comprises accepting a DMS change request identified by a DMS Descriptor, setting a Response Type field of a corresponding DMS Status field in a DMS Response element associated with the DMS Request to "Accept", and setting a DMSID to that of the DMS Descriptor.

Example 41 may include the device of example 20, wherein performing the DMS procedure comprises denying a DMS change request identified by a DMS Descriptor, setting a Response Type field of a corresponding DMS Status field in a DMS Response element associated with the DMS Request to a Response Type value of "Deny", and setting a DMSID to that of the DMS Descriptor.

Example 42 may include the device of example 40, wherein performing the DMS procedure comprises, if the DMS change request is denied, maintaining existing DMS traffic flow of the DMSID.

Example 43 may include the device of example 20, wherein performing the DMS procedure comprises, upon a receipt of a DMS Request frame or a Reassociation Request frame comprising a DMS Request element comprising one or more DMS Descriptors with a Request Type set to Remove and a DMSID field set to a DMSID of an accepted DMS traffic flow, terminating individually addressed frame delivery for requested group addressed frames identified by the DMSID for the non-AP MLD.

Example 44 may include the device of example 43, wherein the DMS Length field in the one or more DMS Descriptors is set to 1.

Example 45 may include the device of example 44, wherein TCLAS Elements, TCLAS Processing Element, TSPEC Element, and Optinal Subelements fields are not included in the one or more DMS Descriptors.

Example 46 may include the device of example 45, wherein performing the DMS procedure comprises responding to a termination request by sending a DMS Response frame including the DMSID and a Response Type value of a Terminate in the Response Type field of a corresponding DMS Status field.

Example 47 may include the device of example 46, wherein a DMS Length field in the corresponding DMS Status field is set to 3.

Example 48 may include the device of example 47, wherein TCLAS Elements, TCLAS Processing Element, TSPEC Element, and Optional Subelement fields are not included in the corresponding DMS Status field if the Response Type field is set to the Terminate.

Example 49 may include the device of example 20, wherein performing the DMS procedure comprises, upon a receipt of a DMS Request frame or a Reassociation Request frame comprising a DMS Request element comprising one or more DMS Descriptors , each DMS Descriptor comprising a Request Type field equal to "Remove" and a DMSID field set to a DMSID of an accepted DMS traffic flow, terminating the one or more accepted DMS traffic flows.

Example 50 may include the device of example 49, wherein performing the DMS procedure comprises responding to a termination request indicated by the DMS Request frame or the Reassociation Request frame by sending a DMS Response frame including the DMSID and a Response Type value of a "Terminate" in the Response Type field of a corresponding DMS Status field.

Example 51 may include the device of example 50, wherein a DMS Length field in the corresponding DMS Status field is set to 3.

Example 52 may include the device of example 51, wherein TCLAS Elements, TCLAS Processing Element, TSPEC Element, and Optional Subelement fields are not included in the corresponding DMS Status field if the Response Type field is set to the "Terminate".

Example 53 may include the device of example 51, wherein performing the DMS procedure comprises sending an unsolicitated DMS Response frame at a time to cancel a granted DMS identified by a DMSID by including the DMSID and a Response Type value of Terminate in a DMS Status field.

Example 54 may include the device of example 20, wherein performing the DMS procedure comprises rejecting a new DMS or cancelling a granted DMS at a time based on a condition of the network.

Example 55 may include the device of example 54, wherein performing the DMS procedure comprises rejecting the new DMS or cancelling the granted DMS based on a number of associated STAs and channel load.

Example 56 may include the device of example 20, wherein performing the DMS procedure comprises causing the non-AP MLD to receive undetectable duplicate MSDUs that are not filtered out by the medium access control (MAC) by not supporting a Last Sequence Control field in a DMS Response frame and sending a multicast MSDU using both individually addressed and group addressed frame transmission, and terminating the DMS stream.

Example 57 may include the device of example 56, wherein not supporting the Last Sequence Control field in the DMS Response frame comprises not providing a sequence number value.

Example 58 may include the device of example 20, wherein performing the DMS procedure comprises, if the length of DMS status fields exceeds 255 octets, including multiple DMS Response elements, each DMS Response element comprising DMS Status fields that are completely included within a first 255 octets.

Example 59 may include the device of example 20, wherein performing the DMS procedure comprises applying a traffic filtering service (TFS) to a frame and then applying the DMS if the device is configured to support both DMS and TFS.

Example 60 may include the device of example 1, wherein the device is a non-AP MLD configured to operate as a DMS recipient and wherein the MLD is an AP MLD configured to operate as a DMS provider.

Example 61 may include the device of example 60, wherein performing the DMS procedure comprises requesting use of a DMS of one or more flows by sending a DMS Request frame or a Reassociation Request frame, which the DMS Request frame of the Reassociation Request frame includes a DMS Request element comprising one or more DMS Descriptors with a Request Type field set to "Add" per flow, wherein each DMS Descriptor field in the DMS Request element identifies group addressed frames that are to be transmitted to device as individually addressed frames in addition to the group addressed frame transmission.

Example 62 may include the device of example 61, wherein a Classifier Type subfield in a TCLAS element is set to a value of any one of 0, 1, or 4, and wherein a Destination Address subfield or a Destination internet protocol (IP) Address subfield is set to a multicast address of the flow that the device requests to receive as the individually addressed frames.

Example 63 may include the device of example 60,wherein performing the DMS procedure comprises receiving a DMS Response frame comprising a modified TCLAS element comprising a Classifier Mask field equal to 0 or one or more Classifier Parameter subfields equal to 0, and interpreting the values of 0 to mean that no suggested value has been provided by the AP MLD.

Example 64 may include the device of example 60, wherein performing the DMS procedure comprises requesting a modification of traffic characteristics or attributes of one or more accepted DMS traffic flows by sending a DMS Request frame or a Reassociation Request frame comprising one or more DMS Descriptors with a Request Type set to "Change" and with one or more DMSIDs that identify one or more DMS traffic flows of the one or more accepted DMS traffic flows to be modified, wherein values of at least one of a TSPEC Element and Optional Subelement fields are different from those of the one or more accepted DMS traffic flows corresponding to the one or more DMSIDs.

Example 65 may include the device of example 60, wherein performing the DMS procedure comprises requesting a removal of one or more accepted DMS traffic flows by sending a DMS Request frame or Reassociation Request frame comprising a DMS Request element comprising one or more DMS Descriptors with a Request Type set to "Remove" and a DMSID field set to that a DMSID of one of the accepted DMS traffic flows to be removed, wherein a DMS Length field in the one or more DMS Descriptors is set to 1, and wherein TCLAS Elements, TCLAS Processing Element, TSPEC Element, and Optional Subelements fields are not included in the DMS Descriptor if the Request Type is set to "Remove".

Example 66 may include the device of example 60, wherein performing the DMS procedure comprises keeping a list of group addresses for which the device has requested a DMS and that have been accepted by the AP MLD.

Example 67 may include the device of example 60, further comprising a requesting STA, wherein performing the DMS procedure comprises discarding, by the requesting STA, group addressed frames that match a group address of the list of group addresses until the respective DMS has been terminated.

Example 68 may include the device of example 67, wherein performing the DMS procedure comprises, if a sequence number value is provided in a Last Sequence Control field in a DMS Response frame is provided, using the sequence number value of the Last Sequence Control field, discarding the group addressed frames that are duplicates of the individually addressed frame, when the DMS is terminated.

Example 68 may include the device of example 60, wherein performing the DMS procedure comprises receiving undetectable duplicate MSDUs that are not filtered out by the medium access control (MAC), where the AP MLD does not support a Last Sequence Control field in a DMS Response frame and sent a multicast MSDU using both individually addressed and group addressed frame transmission, and terminates the DMS stream.

Example 69 may include the device of example 68, wherein not supporting the Last Sequence Control field in the DMS Response frame comprises not receiving a sequence number value.

Example 70 may include the device of example 60, wherein performing the DMS procedure comprises, if the length of DMS Descriptors exceeds 255 octets, including multiple DMS Request elements, each DMS Request element comprising DMS Descriptors that are completely included within 255 octets.

Example 71 may include the device of example 60,wherein performing the DMS procedure comprises not requesting both of a DMS and a FMS, if the non-AP MLD supports both the DMS and the FMS.

Example 72 may include the device of example 60, wherein performing the DMS procedure comprises requesting different services of either a DMS or an FMS for different group addressed frames.

Example 73 may include a non-transitory computer-readable medium storing computer-executable instructions which when executed by one or more processors result in performing operations comprising: performing a directed multicast services (DMS) procedure with an multi-link device (MLD); and applying the DMS procedure at the MLD level instead of an station device (STA) level.

Example 74 may include the non-transitory computer-readable medium of example 6 and/or some other example herein, wherein performing the DMS procedure comprises negotiation of the DMS procedure with a non-access point (AP) MLD.

Example 75 may include the non-transitory computer-readable medium of example 6 and/or some other example herein, wherein the MLD indicates its capability by setting a DMS field of an extended capabilities element to 1.

Example 76 may include the non-transitory computer-readable medium of example 73 and/or some other example herein, wherein performing the DMS procedure comprises advertising the same DMS capability by all STAs affiliated with the MLD.

Example 78 may include the non-transitory computer-readable medium of example 73 and/or some other example herein, wherein performing the DMS procedure comprises setting the DMS field of the extended capabilities element to 1 for transmission by affiliated STAs of the MLD.

Example 79 may include the non-transitory computer-readable medium of example 73 and/or some other example herein, wherein performing the DMS procedure comprises a DMS provider that is an AP MLD.

Example 80 may include the non-transitory computer-readable medium of example 73 and/or some other example herein, wherein performing the DMS procedure comprises a DMS recipient that is a non-AP MLD.

Example 81 may include the non-transitory computer-readable medium of example 73 and/or some other example herein, wherein performing the DMS procedure comprises a negotiation of DMS at the MLD level between a non-AP MLD and an AP MLD; and wherein the one or more processors are of one of the non-AP MLD or the AP MLD.

Example 82 may include the non-transitory computer-readable medium of example 73 and/or some other example herein, wherein performing the DMS procedure comprises transmitting any one of a DMS Request frame, a DMS Response frame, a DMS Request element, a DMS Response element at the MLD level.

Example 83 may include the non-transitory computer-readable medium of example 73 and/or some other example herein, wherein the one or more processors are of an AP MLD; wherein performing the DMS procedure comprises, when DMS is established between the AP MLD and a non-AP MLD, carrying at least one group addressed frame as an individually addressed frame to the non-AP MLD.

Example 84 may include the non-transitory computer-readable medium of example 83 and/or some other example herein, wherein performing the DMS procedure comprises transmitting the individually addressed frame to the non-AP MLD on one of plurality of links established between the device and the non-AP MLD.

Example 85 may include the non-transitory computer-readable medium of example 84 and/or some other example herein, wherein the one of the plurality of links is a link on which the non-AP MLD has its affiliated STA in an awake state.

Example 86 may include the non-transitory computer-readable medium of any one of examples 73, or 83 to 85 and/or some other example herein, wherein performing the DMS procedure comprises transmitting group addressed MSDUs as individually addressed A-MSDUs.

Example 87 may include the non-transitory computer-readable medium of example 73 and/or some other example herein, wherein the one or more processors are of a non-AP MLD comprising a plurality of affiliated STAs; wherein performing the DMS procedure comprises advertising the same DMS capability by the plurality of STAs.

Example 88 may include the non-transitory computer-readable medium of example 73 and/or some other example herein, wherein the one or more processors are of an AP MLD comprising a plurality of APs; wherein each AP of the plurality of APs is configured to communicate with a STA of a plurality of STAs of a non-AP MLD over a link, wherein one of the plurality of APs is configured to transmit the individually addressed frame over a respective link to a respective STA of a non-AP MLD.

Example 89 may include the non-transitory computer-readable medium of example 88 and/or some other example herein, wherein the link comprises a link on which the non-AP MLD has the respective STA in an awake state.

Example 90 may include the non-transitory computer-readable medium of example 89 and/or some other example herein, the one of the plurality of APs is configured to transmit group addressed MSDUs as individually addressed A-MSDUs.

Example 91 may include the non-transitory computer-readable medium of example 73 and/or some other example herein, wherein the one or more processors are of an AP MLD configured to operate as a DMS provider and wherein the MLD is a non-AP MLD configured to operate as a DMS recipient.

Example 92 may include the non-transitory computer-readable medium of example 91, wherein performing the DMS procedure comprises responding, upon a receipt of a DMS Request frame, with a DMS Response frame.

Example 93 may include the non-transitory computer-readable medium of example 92, wherein the DMR Response frame comprises a matching DMS Status field for each received DMS Descriptor field preserving the order present in the DMS Request frame.

Example 94 may include the non-transitory computer-readable medium of example 91, wherein performing the DMS procedure comprises responding, upon a receipt of a Reassociation Request frame, with a Reassociation Response frame.

Example 95 may include the non-transitory computer-readable medium of example 94, wherein the Reassociation Response frame comprises a matching DMS Status field for each received DMS Description field preserving the order present in the Reassociation Request frame.

Example 96 may include the non-transitory computer-readable medium of example 91, wherein performing the DMS procedure comprises accepting a DMS request identified by a DMS Descriptor, setting a Response Type field of a corresponding DMS Status field in a DMS Response element associated with the DMS Request to "Accept", and assigning a nonzero DMS identifier (DMSID), and .

Example 97 may include the non-transitory computer-readable medium of example 91, wherein performing the DMS procedure comprises denying a DMS request identified by a DMS Descriptor, setting a Response Type field of a corresponding DMS Status field in a DMS Response element associated with the DMS Request to a Response Type value of "Deny", and setting a DMSID to zero.

Example 98 may include the non-transitory computer-readable medium of any one of examples 96 or 97, wherein performing the DMS procedure comprises copying traffic classification (TCLAS) Elements, TCLAS Processing Element, traffic specification (TSPEC) Element and Optional Subelements fields of the DMS Request to TCLAS Elements, TCLAS Processing Element, TSPEC Element and Optional Subelements fields of the DMS Status field of the DMS Response element respectively, if the Response Type field is set to "Accept" or "Deny"

Example 99 may include the non-transitory computer-readable medium of any one of examples 96 to 98, wherein performing the DMS procedure comprises, when a DMS Request comprising a DMS descriptor with a set of TCLAS element and TCLAS Processing elements that are identical irrespective of order to another successfully received DMS request that is not yet terminated is received by one or more STAs, assigning the same DMSID that was assigned to a previous DMS Request.

Example 100 may include the non-transitory computer-readable medium of example 91, wherein performing the DMS procedure comprises, denying a DMS Request, and suggesting an alternative TCLAS-based classifier by including one or more TCLAS elements and an optional TCLAS Processing element in a DMS Response.

Example 101 may include the non-transitory computer-readable medium of example 100, wherein performing the DMS procedure comprises including fewer TCLAS elements in the DMS Response corresponding to the DMS Request than TCLAS elements present in the DMS Request.

Example 102 may include the non-transitory computer-readable medium of example 101, wherein performing the DMS procedure comprises not including the optional TCLAS Processing element if a single TCLAS element is included.

Example 103 may include the non-transitory computer-readable medium of any one of examples 100 to 102, wherein performing the DMS procedure comprises changing a TCLAS element's Classifier Type field in the DMS Response, and if the device is unable to suggest a value for a Classifier Mask field, setting the Classifier Mask field to 0.

Example 104 may include the non-transitory computer-readable medium of any one of examples 100 to 103, wherein performing the DMS procedure comprises changing a TCLAS element's Classifier Type field in a DMS Response element of the DMS Response, and if the device is unable to suggest values for one or more Classifier Parameter subfields, setting the one or more Classifier subfields to 0.

Example 104 may include the non-transitory computer-readable medium of any one of examples 100 to 103, wherein performing the DMS procedure comprises changing a TCLAS element's Classifier Mask field in a DMS Response element of the DMS Response, and if the device is unable to suggest values for one or more Classifier Parameter subfields, setting the one or more Classifier subfields to 0.

Example 105 may include the non-transitory computer-readable medium of example 104, wherein performing the DMS procedure comprises sending a DMS Response frame comprising a modified TCLAS element comprising a Classifier Mask field equal to 0.

Example 106 may include the non-transitory computer-readable medium of any one of examples 104 or 105, wherein performing the DMS procedure comprises sending a DMS Response frame comprising one or more Classifier Parameter subfields equal to 0.

Example 107 may include the non-transitory computer-readable medium of example 91, wherein performing the DMS procedure comprises accepting a DMS Request, and if the DMS Request is accepted, sending subsequent group addressed MSDUs that match a frame classifier specified in DMS Descriptors to the non-AP MLD as A-MSDU subframes within an individually addressed A-MSDU frame.

Example 108 may include the non-transitory computer-readable medium of example 91, wherein performing the DMS procedure comprises accepting a DMS Request, and if the DMS Request is accepted, sending subsequent group addressed MSDUs that match a frame classifier specified in DMS Descriptors to the requesting STA as A-MSDU subframes within an individually addressed A-MSDU frame.

Example 109 may include the non-transitory computer-readable medium of any one of examples 107 or 108, wherein the A-MSDU comprises A-MSDU subframe headers' destination address set to a multicast address for the corresponding MSDUs.

Example 110 may include the non-transitory computer-readable medium of example 109, wherein performing the DMS procedure comprises continuing to transmit matching frames as group addressed frames if at least one associated STA has not requested a DMS for the matching frames.

Example 111 may include the non-transitory computer-readable medium of example 91, wherein performing the DMS procedure comprises accepting a DMS change request identified by a DMS Descriptor, setting a Response Type field of a corresponding DMS Status field in a DMS Response element associated with the DMS Request to "Accept", and setting a DMSID to that of the DMS Descriptor.

Example 112 may include the non-transitory computer-readable medium of example 91, wherein performing the DMS procedure comprises denying a DMS change request identified by a DMS Descriptor, setting a Response Type field of a corresponding DMS Status field in a DMS Response element associated with the DMS Request to a Response Type value of "Deny", and setting a DMSID to that of the DMS Descriptor.

Example 113 may include the non-transitory computer-readable medium of example 112, wherein performing the DMS procedure comprises, if the DMS change request is denied, maintaining existing DMS traffic flow of the DMSID.

Example 114 may include the non-transitory computer-readable medium of example 91, wherein performing the DMS procedure comprises, upon a receipt of a DMS Request frame or a Reassociation Request frame comprising a DMS Request element comprising one or more DMS Descriptors with a Request Type set to Remove and a DMSID field set to a DMSID of an accepted DMS traffic flow, terminating individually addressed frame delivery for requested group addressed frames identified by the DMSID for the non-AP MLD.

Example 115 may include the non-transitory computer-readable medium of example 114, wherein the DMS Length field in the one or more DMS Descriptors is set to 1, wherein TCLAS Elements, TCLAS Processing Element, TSPEC Element, and Optinal Subelements fields are not included in the one or more DMS Descriptors.

Example 116 may include the non-transitory computer-readable medium of example 115, wherein performing the DMS procedure comprises responding to a termination request by sending a DMS Response frame including the DMSID and a Response Type value of a Terminate in the Response Type field of a corresponding DMS Status field, wherein a DMS Length field in the corresponding DMS Status field is set to 3.

Example 117 may include the non-transitory computer-readable medium of example 116, wherein TCLAS Elements, TCLAS Processing Element, TSPEC Element, and Optional Subelement fields are not included in the corresponding DMS Status field if the Response Type field is set to the Terminate.

Example 118 may include the non-transitory computer-readable medium of example 91, wherein performing the DMS procedure comprises, upon a receipt of a DMS Request frame or a Reassociation Request frame comprising a DMS Request element comprising one or more DMS Descriptors , each DMS Descriptor comprising a Request Type field equal to "Remove" and a DMSID field set to a DMSID of an accepted DMS traffic flow, terminating the one or more accepted DMS traffic flows.

Example 119 may include the non-transitory computer-readable medium of example 118, wherein performing the DMS procedure comprises responding to a termination request indicated by the DMS Request frame or the Reassociation Request frame by sending a DMS Response frame including the DMSID and a Response Type value of a "Terminate" in the Response Type field of a corresponding DMS Status field, wherein a DMS Length field in the corresponding DMS Status field is set to 3.

Example 120 may include the non-transitory computer-readable medium of example 119, wherein TCLAS Elements, TCLAS Processing Element, TSPEC Element, and Optional Subelement fields are not included in the corresponding DMS Status field if the Response Type field is set to the "Terminate".

Example 121 may include the non-transitory computer-readable medium of example 120, wherein performing the DMS procedure comprises sending an unsolicitated DMS Response frame at a time to cancel a granted DMS identified by a DMSID by including the DMSID and a Response Type value of Terminate in a DMS Status field.

Example 122 may include the non-transitory computer-readable medium of example 91, wherein performing the DMS procedure comprises rejecting a new DMS or cancelling a granted DMS at a time based on a condition of the network.

Example 123 may include the non-transitory computer-readable medium of example 122, wherein performing the DMS procedure comprises rejecting the new DMS or cancelling the granted DMS based on a number of associated STAs and channel load.

Example 124 may include the non-transitory computer-readable medium of example 91, wherein performing the DMS procedure comprises causing the non-AP MLD to receive undetectable duplicate MSDUs that are not filtered out by the medium access control (MAC) by not supporting a Last Sequence Control field in a DMS Response frame and sending a multicast MSDU using both individually addressed and group addressed frame transmission, and terminating the DMS stream.

Example 125 may include the non-transitory computer-readable medium of example 124, wherein not supporting the Last Sequence Control field in the DMS Response frame comprises not providing a sequence number value.

Example 126 may include the non-transitory computer-readable medium of example 91, wherein performing the DMS procedure comprises, if the length of DMS status fields exceeds 255 octets, including multiple DMS Response elements, each DMS Response element comprising DMS Status fields that are completely included within a first 255 octets.

Example 127 may include the non-transitory computer-readable medium of example 91, wherein performing the DMS procedure comprises applying a traffic filtering service (TFS) to a frame and then applying the DMS if the device is configured to support both DMS and TFS.

Example 128 may include the non-transitory computer-readable medium of example 73, wherein the one or more processors are of a non-AP MLD configured to operate as a DMS recipient and wherein the MLD is an AP MLD configured to operate as a DMS provider.

Example 129 may include the non-transitory computer-readable medium of example 128, wherein performing the DMS procedure comprises requesting use of a DMS of one or more flows by sending a DMS Request frame or a Reassociation Request frame, which the DMS Request frame of the Reassociation Request frame includes a DMS Request element comprising one or more DMS Descriptors with a Request Type field set to "Add" per flow, wherein each DMS Descriptor field in the DMS Request element identifies group addressed frames that are to be transmitted to device as individually addressed frames in addition to the group addressed frame transmission.

Example 130 may include the non-transitory computer-readable medium of example 129, wherein a Classifier Type subfield in a TCLAS element is set to a value of any one of 0, 1, or 4, and wherein a Destination Address subfield or a Destination internet protocol (IP) Address subfield is set to a multicast address of the flow that the device requests to receive as the individually addressed frames.

Example 131 may include the non-transitory computer-readable medium of example 128, wherein performing the DMS procedure comprises receiving a DMS Response frame comprising a modified TCLAS element comprising a Classifier Mask field equal to 0 or one or more Classifier Parameter subfields equal to 0, and interpreting the values of 0 to mean that no suggested value has been provided by the AP MLD.

Example 132 may include the non-transitory computer-readable medium of example 128, wherein performing the DMS procedure comprises requesting a modification of traffic characteristics or attributes of one or more accepted DMS traffic flows by sending a DMS Request frame or a Reassociation Request frame comprising one or more DMS Descriptors with a Request Type set to "Change" and with one or more DMSIDs that identify one or more DMS traffic flows of the one or more accepted DMS traffic flows to be modified, wherein values of at least one of a TSPEC Element and Optional Subelement fields are different from those of the one or more accepted DMS traffic flows corresponding to the one or more DMSIDs.

Example 133 may include the non-transitory computer-readable medium of example 128, wherein performing the DMS procedure comprises requesting a removal of one or more accepted DMS traffic flows by sending a DMS Request frame or Reassociation Request frame comprising a DMS Request element comprising one or more DMS Descriptors with a Request Type set to "Remove" and a DMSID field set to that a DMSID of one of the accepted DMS traffic flows to be removed, wherein a DMS Length field in the one or more DMS Descriptors is set to 1, and wherein TCLAS Elements, TCLAS Processing Element, TSPEC Element, and Optional Subelements fields are not included in the DMS Descriptor if the Request Type is set to "Remove".

Example 134 may include the non-transitory computer-readable medium of example 60, wherein performing the DMS procedure comprises keeping a list of group addresses for which the device has requested a DMS and that have been accepted by the AP MLD.

Example 135 may include the non-transitory computer-readable medium of example 60, wherein performing the DMS procedure comprises discarding, by a requesting STA, group addressed frames that match a group address of the list of group addresses until the respective DMS has been terminated.

Example 136 may include the non-transitory computer-readable medium of example 135, wherein performing the DMS procedure comprises, if a sequence number value is provided in a Last Sequence Control field in a DMS Response frame is provided, using the sequence number value of the Last Sequence Control field, discarding the group addressed frames that are duplicates of the individually addressed frame, when the DMS is terminated.

Example 137 may include the non-transitory computer-readable medium of example 128, wherein performing the DMS procedure comprises receiving undetectable duplicate MSDUs that are not filtered out by the medium access control (MAC), where the AP MLD does not support a Last Sequence Control field in a DMS Response frame and sent a multicast MSDU using both individually addressed and group addressed frame transmission, and terminates the DMS stream.

Example 138 may include the non-transitory computer-readable medium of example 137, wherein not supporting the Last Sequence Control field in the DMS Response frame comprises not receiving a sequence number value.

Example 139 may include the non-transitory computer-readable medium of example 128, wherein performing the DMS procedure comprises, if the length of DMS Descriptors exceeds 255 octets, including multiple DMS Request elements, each DMS Request element comprising DMS Descriptors that are completely included within 255 octets.

Example 140 may include the non-transitory computer-readable medium of example 128,wherein performing the DMS procedure comprises not requesting both of a DMS and a FMS, if the non-AP MLD supports both the DMS and the FMS.

Example 141 may include the non-transitory computer-readable medium of example 128, wherein performing the DMS procedure comprises requesting different services of either a DMS or an FMS for different group addressed frames.

Example 142 may include a method comprising: performing, by one or more processors, a directed multicast services (DMS) procedure with an multi-link device (MLD); and applying the DMS procedure at the MLD level instead of an station device (STA) level.

Example 143 may include the method of example 9 and/or some other example herein, wherein performing the DMS procedure comprises negotiation of the DMS procedure with a non-access point (AP) MLD.

Example 144 may include the method of example 9 and/or some other example herein, wherein the MLD indicates its capability by setting a DMS field of an extended capabilities element to 1.

Example 145 may include the method of example 142 and/or some other example herein, wherein performing the DMS procedure comprises advertising the same DMS capability by all STAs affiliated with the MLD.

Example 146 may include the method of example 142 and/or some other example herein, wherein performing the DMS procedure comprises setting the DMS field of the extended capabilities element to 1 for transmission by affiliated STAs of the MLD.

Example 147 may include the method of example 142 and/or some other example herein, wherein performing the DMS procedure comprises a DMS provider that is an AP MLD.

Example 148 may include the method of example 142 and/or some other example herein, wherein performing the DMS procedure comprises a DMS recipient that is a non-AP MLD.

Example 149 may include the method of example 142 and/or some other example herein, wherein performing the DMS procedure comprises a negotiation of DMS at the MLD level between a non-AP MLD and an AP MLD; and wherein the one or more processors are of one of the non-AP MLD or the AP MLD.

Example 150 may include the method of example 142 and/or some other example herein, wherein performing the DMS procedure comprises transmitting any one of a DMS Request frame, a DMS Response frame, a DMS Request element, a DMS Response element at the MLD level.

Example 151 may include the method of example 142 and/or some other example herein, wherein the method is performed by an AP MLD; wherein performing the DMS procedure comprises, when DMS is established between the AP MLD and a non-AP MLD, carrying at least one group addressed frame as an individually addressed frame to the non-AP MLD.

Example 152 may include the method of example 151 and/or some other example herein, wherein performing the DMS procedure comprises transmitting the individually addressed frame to the non-AP MLD on one of plurality of links established between the device and the non-AP MLD.

Example 153 may include the method of example 152 and/or some other example herein, wherein the one of the plurality of links is a link on which the non-AP MLD has its affiliated STA in an awake state.

Example 154 may include the method of any one of examples 142, or 151 to 153 and/or some other example herein, wherein performing the DMS procedure comprises transmitting group addressed MSDUs as individually addressed A-MSDUs.

Example 155 may include the method of example 142 and/or some other example herein, wherein the one or more processors are of a non-AP MLD comprising a plurality of affiliated STAs; wherein performing the DMS procedure comprises advertising the same DMS capability by the plurality of STAs.

Example 156 may include the method of example 142 and/or some other example herein, wherein the one or more processors are of an AP MLD comprising a plurality of APs; wherein each AP of the plurality of APs is configured to communicate with a STA of a plurality of STAs of a non-AP MLD over a link, wherein one of the plurality of APs is configured to transmit the individually addressed frame over a respective link to a respective STA of a non-AP MLD.

Example 157 may include the method of example 156 and/or some other example herein, wherein the link comprises a link on which the non-AP MLD has the respective STA in an awake state.

Example 158 may include the method of example 157 and/or some other example herein, the one of the plurality of APs is configured to transmit group addressed MSDUs as individually addressed A-MSDUs.

Example 159 may include the method of example 142 and/or some other example herein, wherein the method is performed an AP MLD configured to operate as a DMS provider and wherein the MLD is a non-AP MLD configured to operate as a DMS recipient.

Example 160 may include the method of example 159, wherein performing the DMS procedure comprises responding, upon a receipt of a DMS Request frame, with a DMS Response frame.

Example 161 may include the method of example 160, wherein the DMR Response frame comprises a matching DMS Status field for each received DMS Descriptor field preserving the order present in the DMS Request frame.

Example 162 may include the method of example 159, wherein performing the DMS procedure comprises responding, upon a receipt of a Reassociation Request frame, with a Reassociation Response frame.

Example 163 may include the method of example 162, wherein the Reassociation Response frame comprises a matching DMS Status field for each received DMS Description field preserving the order present in the Reassociation Request frame.

Example 164 may include the method of example 159, wherein performing the DMS procedure comprises accepting a DMS request identified by a DMS Descriptor, setting a Response Type field of a corresponding DMS Status field in a DMS Response element associated with the DMS Request to "Accept", and assigning a nonzero DMS identifier (DMSID), and .

Example 165 may include the method of example 159, wherein performing the DMS procedure comprises denying a DMS request identified by a DMS Descriptor, setting a Response Type field of a corresponding DMS Status field in a DMS Response element associated with the DMS Request to a Response Type value of "Deny", and setting a DMSID to zero.

Example 166 may include the method of any one of examples 164 or 165, wherein performing the DMS procedure comprises copying traffic classification (TCLAS) Elements, TCLAS Processing Element, traffic specification (TSPEC) Element and Optional Subelements fields of the DMS Request to TCLAS Elements, TCLAS Processing Element, TSPEC Element and Optional Subelements fields of the DMS Status field of the DMS Response element respectively, if the Response Type field is set to "Accept" or "Deny"

Example 167 may include the method of any one of examples 164 to 166, wherein performing the DMS procedure comprises, when a DMS Request comprising a DMS descriptor with a set of TCLAS element and TCLAS Processing elements that are identical irrespective of order to another successfully received DMS request that is not yet terminated is received by one or more STAs, assigning the same DMSID that was assigned to a previous DMS Request.

Example 168 may include the method of example 159, wherein performing the DMS procedure comprises, denying a DMS Request, and suggesting an alternative TCLAS-based classifier by including one or more TCLAS elements and an optional TCLAS Processing element in a DMS Response.

Example 169 may include the method of example 168, wherein performing the DMS procedure comprises including fewer TCLAS elements in the DMS Response corresponding to the DMS Request than TCLAS elements present in the DMS Request.

Example 170 may include the method of example 169, wherein performing the DMS procedure comprises not including the optional TCLAS Processing element if a single TCLAS element is included.

Example 171 may include the method of any one of examples 168 to 170, wherein performing the DMS procedure comprises changing a TCLAS element's Classifier Type field in the DMS Response, and if the device is unable to suggest a value for a Classifier Mask field, setting the Classifier Mask field to 0.

Example 172 may include the method of any one of examples 168 to 171, wherein performing the DMS procedure comprises changing a TCLAS element's Classifier Type field in a DMS Response element of the DMS Response, and if the device is unable to suggest values for one or more Classifier Parameter subfields, setting the one or more Classifier subfields to 0.

Example 173 may include the method of any one of examples 168 to 172, wherein performing the DMS procedure comprises changing a TCLAS element's Classifier Mask field in a DMS Response element of the DMS Response, and if the device is unable to suggest values for one or more Classifier Parameter subfields, setting the one or more Classifier subfields to 0.

Example 174 may include the method of example 173, wherein performing the DMS procedure comprises sending a DMS Response frame comprising a modified TCLAS element comprising a Classifier Mask field equal to 0.

Example 175 may include the method of any one of examples 173 or 174, wherein performing the DMS procedure comprises sending a DMS Response frame comprising one or more Classifier Parameter subfields equal to 0.

Example 176 may include the method of example 159, wherein performing the DMS procedure comprises accepting a DMS Request, and if the DMS Request is accepted, sending subsequent group addressed MSDUs that match a frame classifier specified in DMS Descriptors to the non-AP MLD as A-MSDU subframes within an individually addressed A-MSDU frame.

Example 177 may include the method of example 159, wherein performing the DMS procedure comprises accepting a DMS Request, and if the DMS Request is accepted, sending subsequent group addressed MSDUs that match a frame classifier specified in DMS Descriptors to the requesting STA as A-MSDU subframes within an individually addressed A-MSDU frame.

Example 178 may include the method of any one of examples 176 or 177, wherein the A-MSDU comprises A-MSDU subframe headers' destination address set to a multicast address for the corresponding MSDUs.

Example 179 may include the method of example 178, wherein performing the DMS procedure comprises continuing to transmit matching frames as group addressed frames if at least one associated STA has not requested a DMS for the matching frames.

Example 180 may include the method of example 159, wherein performing the DMS procedure comprises accepting a DMS change request identified by a DMS Descriptor, setting a Response Type field of a corresponding DMS Status field in a DMS Response element associated with the DMS Request to "Accept", and setting a DMSID to that of the DMS Descriptor.

Example 181 may include the method of example 159, wherein performing the DMS procedure comprises denying a DMS change request identified by a DMS Descriptor, setting a Response Type field of a corresponding DMS Status field in a DMS Response element associated with the DMS Request to a Response Type value of "Deny", and setting a DMSID to that of the DMS Descriptor.

Example 182 may include the method of example 181, wherein performing the DMS procedure comprises, if the DMS change request is denied, maintaining existing DMS traffic flow of the DMSID.

Example 183 may include the method of example 159, wherein performing the DMS procedure comprises, upon a receipt of a DMS Request frame or a Reassociation Request frame comprising a DMS Request element comprising one or more DMS Descriptors with a Request Type set to Remove and a DMSID field set to a DMSID of an accepted DMS traffic flow, terminating individually addressed frame delivery for requested group addressed frames identified by the DMSID for the non-AP MLD.

Example 184 may include the method of example 183, wherein the DMS Length field in the one or more DMS Descriptors is set to 1, wherein TCLAS Elements, TCLAS Processing Element, TSPEC Element, and Optional Subelements fields are not included in the one or more DMS Descriptors.

Example 185 may include the method of example 184, wherein performing the DMS procedure comprises responding to a termination request by sending a DMS Response frame including the DMSID and a Response Type value of a Terminate in the Response Type field of a corresponding DMS Status field, wherein a DMS Length field in the corresponding DMS Status field is set to 3.

Example 186 may include the method of example 185, wherein TCLAS Elements, TCLAS Processing Element, TSPEC Element, and Optional Subelements fields are not included in the corresponding DMS Status field if the Response Type field is set to the Terminate.

Example 187 may include the method of example 159, wherein performing the DMS procedure comprises, upon a receipt of a DMS Request frame or a Reassociation Request frame comprising a DMS Request element comprising one or more DMS Descriptors , each DMS Descriptor comprising a Request Type field equal to "Remove" and a DMSID field set to a DMSID of an accepted DMS traffic flow, terminating the one or more accepted DMS traffic flows.

Example 188 may include the method of example 187, wherein performing the DMS procedure comprises responding to a termination request indicated by the DMS Request frame or the Reassociation Request frame by sending a DMS Response frame including the DMSID and a Response Type value of a "Terminate" in the Response Type field of a corresponding DMS Status field, wherein a DMS Length field in the corresponding DMS Status field is set to 3.

Example 189 may include the method of example 188, wherein TCLAS Elements, TCLAS Processing Element, TSPEC Element, and Optional Subelement fields are not included in the corresponding DMS Status field if the Response Type field is set to the "Terminate".

Example 190 may include the method of example 189, wherein performing the DMS procedure comprises sending an unsolicitated DMS Response frame at a time to cancel a granted DMS identified by a DMSID by including the DMSID and a Response Type value of Terminate in a DMS Status field.

Example 191 may include the method of example 159, wherein performing the DMS procedure comprises rejecting a new DMS or cancelling a granted DMS at a time based on a condition of the network.

Example 192 may include the method of example 191, wherein performing the DMS procedure comprises rejecting the new DMS or cancelling the granted DMS based on a number of associated STAs and channel load.

Example 193 may include the method of example 159, wherein performing the DMS procedure comprises causing the non-AP MLD to receive undetectable duplicate MSDUs that are not filtered out by the medium access control (MAC) by not supporting a Last Sequence Control field in a DMS Response frame and sending a multicast MSDU using both individually addressed and group addressed frame transmission, and terminating the DMS stream.

Example 194 may include the method of example 193, wherein not supporting the Last Sequence Control field in the DMS Response frame comprises not providing a sequence number value.

Example 195 may include the method of example 159, wherein performing the DMS procedure comprises, if the length of DMS status fields exceeds 255 octets, including multiple DMS Response elements, each DMS Response element comprising DMS Status fields that are completely included within a first 255 octets.

Example 196 may include the method of example 159, wherein performing the DMS procedure comprises applying a traffic filtering service (TFS) to a frame and then applying the DMS if the device is configured to support both DMS and TFS.

Example 197 may include the method of example 141, wherein the method is performed by a non-AP MLD configured to operate as a DMS recipient and wherein the MLD is an AP MLD configured to operate as a DMS provider.

Example 198 may include the method of example 197, wherein performing the DMS procedure comprises requesting use of a DMS of one or more flows by sending a DMS Request frame or a Reassociation Request frame, which the DMS Request frame of the Reassociation Request frame includes a DMS Request element comprising one or more DMS Descriptors with a Request Type field set to "Add" per flow, wherein each DMS Descriptor field in the DMS Request element identifies group addressed frames that are to be transmitted to device as individually addressed frames in addition to the group addressed frame transmission.

Example 199 may include the method of example 198, wherein a Classifier Type subfield in a TCLAS element is set to a value of any one of 0, 1, or 4, and wherein a Destination Address subfield or a Destination internet protocol (IP) Address subfield is set to a multicast address of the flow that the device requests to receive as the individually addressed frames.

Example 200 may include the method of example 199, wherein performing the DMS procedure comprises receiving a DMS Response frame comprising a modified TCLAS element comprising a Classifier Mask field equal to 0 or one or more Classifier Parameter subfields equal to 0, and interpreting the values of 0 to mean that no suggested value has been provided by the AP MLD.

Example 201 may include the method of example 199, wherein performing the DMS procedure comprises requesting a modification of traffic characteristics or attributes of one or more accepted DMS traffic flows by sending a DMS Request frame or a Reassociation Request frame comprising one or more DMS Descriptors with a Request Type set to "Change" and with one or more DMSIDs that identify one or more DMS traffic flows of the one or more accepted DMS traffic flows to be modified, wherein values of at least one of a TSPEC Element and Optional Subelements fields are different from those of the one or more accepted DMS traffic flows corresponding to the one or more DMSIDs.

Example 202 may include the method of example 201, wherein performing the DMS procedure comprises requesting a removal of one or more accepted DMS traffic flows by sending a DMS Request frame or Reassociation Request frame comprising a DMS Request element comprising one or more DMS Descriptors with a Request Type set to "Remove" and a DMSID field set to that a DMSID of one of the accepted DMS traffic flows to be removed, wherein a DMS Length field in the one or more DMS Descriptors is set to 1, and wherein TCLAS Elements, TCLAS Processing Element, TSPEC Element, and Optional Subelements fields are not included in the DMS Descriptor if the Request Type is set to "Remove".

Example 203 may include the method of example 197, wherein performing the DMS procedure comprises keeping a list of group addresses for which the device has requested a DMS and that have been accepted by the AP MLD.

Example 204 may include the method of example 203, wherein performing the DMS procedure comprises discarding, by a requesting STA, group addressed frames that match a group address of the list of group addresses until the respective DMS has been terminated.

Example 205 may include the method of example 204, wherein performing the DMS procedure comprises, if a sequence number value is provided in a Last Sequence Control field in a DMS Response frame is provided, using the sequence number value of the Last Sequence Control field, discarding the group addressed frames that are duplicates of the individually addressed frame, when the DMS is terminated.

Example 206 may include the method of example 197, wherein performing the DMS procedure comprises receiving undetectable duplicate MSDUs that are not filtered out by the medium access control (MAC), where the AP MLD does not support a Last Sequence Control field in a DMS Response frame and sent a multicast MSDU using both individually addressed and group addressed frame transmission, and terminates the DMS stream.

Example 207 may include the method of example 206, wherein not supporting the Last Sequence Control field in the DMS Response frame comprises not receiving a sequence number value.

Example 208 may include the method of example 197, wherein performing the DMS procedure comprises, if the length of DMS Descriptors exceeds 255 octets, including multiple DMS Request elements, each DMS Request element comprising DMS Descriptors that are completely included within 255 octets.

Example 209 may include the method of example 197,wherein performing the DMS procedure comprises not requesting both of a DMS and a FMS, if the non-AP MLD supports both the DMS and the FMS.

Example 210 may include the method of example 197, wherein performing the DMS procedure comprises requesting different services of either a DMS or an FMS for different group addressed frames.

Example 211 may include an apparatus comprising means for: performing a directed multicast services (DMS) procedure with an multi-link device (MLD); and applying the DMS procedure at the MLD level instead of an station device (STA) level.

Example 212 may include the apparatus of example 211 and/or some other example herein, wherein performing the DMS procedure comprises negotiation of the DMS procedure with a non-access point (AP) MLD.

Example 213 may include the apparatus of example 211 and/or some other example herein, wherein the MLD indicates its capability by setting a DMS field of an extended capabilities element to 1.

Example 214 may include one or more non-transitory computer-readable media comprising instructions to cause an electronic device, upon execution of the instructions by one or more processors of the electronic device, to perform one or more elements of a method described in or related to any of examples 1-213, or any other method or process described herein.

Example 215 may include an apparatus comprising logic, modules, and/or circuitry to perform one or more elements of a method described in or related to any of examples 1-213, or any other method or process described herein.

Example 216 may include a method, technique, or process as described in or related to any of examples 1-213, or portions or parts thereof.

Example 217 may include an apparatus comprising: one or more processors and one or more computer readable media comprising instructions that, when executed by the one or more processors, cause the one or more processors to perform the method, techniques, or process as described in or related to any of examples 1-213, or portions thereof.

Example 218 may include a method of communicating in a wireless network as shown and described herein.

Example 219 may include a system for providing wireless communication as shown and described herein.

Example 220 may include a device for providing wireless communication as shown and described herein.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A multi-link device, MLD, (120, 102) configured to perform a directed multicast service, DMS, procedure with an other MLD (102, 120), the MLD (120, 102) comprising processing circuitry (206) coupled to a storage (208), the processing circuitry (206) configured to:
perform the DMS procedure with the other MLD (102, 120); and
apply the DMS procedure at the MLD level instead of a station device, STA, level,
wherein applying the DMS procedure at the MLD level includes that the DMS procedure is established between the MLD (120, 102) and the other MLD (102, 120), that some or all of group-addressed frames are carried as individually addressed frames by a first MLD of the MLD and the other MLD, being an access point, AP, MLD (102) to a second MLD of the MLD and the other MLD, being a non-AP MLD (120), and that these individually addressed frames are transmitted on any link (Link1, ..., Linkn) on which the non-AP MLD (120) has its affiliated STA in an awake state.

2. The MLD (120, 102) of claim 1, wherein performing the DMS procedure comprises negotiation of the DMS procedure with the other MLD (102, 120) being a non-access point, AP, MLD (120).

3. The MLD (120, 102) of claim 1, wherein the MLD (102, 120) is configured to indicate its capability by setting a DMS field of an extended capabilities element to 1.

4. The MLD (120, 102) of any one of claims 1 and 3, further comprising a transceiver (210) configured to transmit and receive wireless signals.

5. The MLD (120, 102) of claim 4, further comprising an antenna (201) coupled to the transceiver (210) to cause to send a frame.

6. The MLD (120, 102) of any one of claims 1 and 3 to 5, wherein performing the DMS procedure comprises advertising the same DMS capability by all STAs (STA1, ..., STAn) affiliated with the other MLD (102, 120).

7. The MLD (120, 102) of any one of claims 1 and 3 to 6, wherein performing the DMS procedure comprises setting the DMS field of the extended capabilities element to 1 for transmission by affiliated STAs (STA1, ..., STAn) of the MLD (102, 120)

8. The MLD (120, 102) of any one of claim 1, wherein performing the DMS procedure comprises a negotiation of the DMS procedure at the MLD level between a non-AP MLD and an AP MLD; and wherein the MLD (120, 102) is one of the non-AP MLD (120) or the AP MLD (102).

9. The MLD (120, 102) of any one of claims 1 and 8, wherein performing the DMS procedure comprises transmitting any one of a DMS Request frame, a DMS Response frame, a DMS Request element, a DMS Response element at the MLD level.

10. The MLD (120, 102) of any one of claims 1 and 2, wherein the MLD (120, 102) is an AP MLD (102); wherein performing the DMS procedure comprises, when the DMS procedure is established between the MLD (102) and a non-AP MLD (120), carrying at least one group addressed frame (MSDU) as an individually addressed frame (A-MSDU) to the non-AP MLD (120).

11. The MLD (120, 102) of any one of claims 1 and 3-7, wherein the MLD (120, 102) is a non-AP MLD (120) comprising a plurality of affiliated STAs (STA1, ..., STAn); wherein performing the DMS procedure comprises advertising the same DMS capability by the plurality of STAs (STA1, ..., STAn).

12. A non-transitory computer-readable medium storing computer-executable instructions which when executed by one or more processors result in performing operations comprising:
performing by a multi-link device, MLD, (120, 102) a directed multicast services, DMS, procedure with an other multi-link device, MLD (102, 120); and
applying the DMS procedure at the MLD level instead of a station device, STA, level, wherein applying the DMS procedure at the MLD level includes that the DMS procedure is established between the MLD (120, 102) and the other MLD (102, 120), that some or all of group-addressed frames are carried as individually addressed frame by a first MLD of the MLD and the other MLD, being an access point, AP, MLD (102) to a second MLD of the MLD and the other MLD, being a non-AP MLD (120), and that these individually addressed frames are transmitted on any link (Link1, ..., Linkn) on which the non-AP MLD (120) has its affiliated STA in an awake state.

13. The non-transitory computer-readable medium of claim 12, wherein performing the DMS procedure comprises negotiation of the DMS procedure with the other MLD (102, 120) being a non-access point, AP, MLD (120).

14. A method comprising:
performing, by one or more processors of a multi-link device, MLD, (120, 102), a directed multicast services, DMS, procedure with an other multi-link device, MLD, (102, 120); and
applying the DMS procedure at the MLD level instead of a station device, STA, level, wherein applying the DMS procedure at the MLD level includes that the DMS procedure is established between the MLD (120, 102) and the other MLD (102, 120), that some or all of group-addressed frames are carried as individually addressed frame by a first MLD of the MLD and the other MLD, being an access point, AP, MLD (102) to a second MLD of the MLD and the other MLD, being a non-AP MLD (120), and that these individually addressed frames are transmitted on any link (Link1, ..., Linkn) on which the non-AP MLD (120) has its affiliated STA in an awake state.

15. The method of claim 14, wherein performing the DMS procedure comprises negotiation of the DMS procedure with the other MLD (102, 120) being a non-access point, AP, MLD (120).

## Patentansprüche

1. Mehrfachverbindungsvorrichtung, MLD, (120, 102), die dazu ausgelegt ist, eine Prozedur eines gerichteten Multicast-Dienstes, DMS, mit einer anderen MLD (102, 120) durchzuführen, wobei die MLD (120, 102) eine Verarbeitungsschaltungsanordnung (206) umfasst, die mit einem Speicher (208) gekoppelt ist, wobei die Verarbeitungsschaltungsanordnung (206) zu Folgendem ausgelegt ist:
Durchführen der DMS-Prozedur mit der anderen MLD (102, 120); und
Anwenden der DMS-Prozedur auf der MLD-Ebene anstatt auf einer Stationsvorrichtungs-, STA-, Ebene,
wobei das Anwenden der DMS-Prozedur auf der MLD-Ebene beinhaltet, dass die DMS-Prozedur zwischen der MLD (120, 102) und der anderen MLD (102, 120) hergestellt wird, dass einige oder alle gruppenadressierten Frames als einzeln adressierte Frames durch eine erste MLD der MLD und der anderen MLD, die eine Zugangspunkt (Access Point)-, AP-, MLD (102) ist, an eine zweite MLD der MLD und der anderen MLD, die eine Nicht-AP-MLD (120) ist, übertragen werden, und dass diese einzeln adressierten Frames auf einer beliebigen Verbindung (Link1, ..., Linkn) gesendet werden, auf der sich die der Nicht-AP-MLD (120) zugeordnete STA in einem Wachzustand befindet.

2. MLD (120, 102) nach Anspruch 1, wobei das Durchführen der DMS-Prozedur Aushandeln der DMS-Prozedur mit der anderen MLD (102, 120), die eine Nicht-Zugangspunkt(Access Point)-, AP-, MLD (120) ist, umfasst.

3. MLD (120, 102) nach Anspruch 1, wobei die MLD (102, 120) dazu ausgelegt ist, ihre Fähigkeit durch Einstellen eines DMS-Felds eines Elements für erweiterte Fähigkeiten auf 1 anzugeben.

4. MLD (120, 102) nach einem der Ansprüche 1 und 3, ferner umfassend einen Sendeempfänger (210), der dazu ausgelegt ist, drahtlose Signale zu senden und zu empfangen.

5. MLD (120, 102) nach Anspruch 4, ferner umfassend eine Antenne (201), die mit dem Sendeempfänger (210) gekoppelt ist, um zu bewirken, dass ein Frame gesendet wird.

6. MLD (120, 102) nach einem der Ansprüche 1 und 3 bis 5, wobei das Durchführen der DMS-Prozedur Bekanntgeben derselben DMS-Fähigkeit durch alle STAs (STA1, ..., STAn), die der anderen MLD (102, 120) zugeordnet sind, umfasst.

7. MLD (120, 102) nach einem der Ansprüche 1 und 3 bis 6, wobei das Durchführen der DMS-Prozedur Einstellen des DMS-Feldes des Elements für erweiterte Fähigkeiten auf 1 zum Senden durch zugeordnete STAs (STA1, ..., STAn) der MLD (102, 120) umfasst.

8. MLD (120, 102) nach einem der Ansprüche 1, wobei das Durchführen der DMS-Prozedur eine Verhandlung der DMS-Prozedur auf der MLD-Ebene zwischen einer Nicht-AP-MLD und einer AP-MLD umfasst; und wobei die MLD (120, 102) eine der Nicht-AP-MLD (120) oder der AP-MLD (102) ist.

9. MLD (120, 102) nach einem der Ansprüche 1 und 8, wobei das Durchführen der DMS-Prozedur Senden eines beliebigen von einem DMS-Anforderungs-Frame, einem DMS-Antwort-Frame, einem DMS-Anforderungselement, einem DMS-Antwortelement auf der MLD-Ebene umfasst.

10. MLD (120, 102) nach einem der Ansprüche 1 und 2, wobei die MLD (120, 102) eine AP-MLD (102) ist; wobei das Durchführen der DMS-Prozedur, wenn die DMS-Prozedur zwischen der MLD (102) und einer Nicht-AP-MLD (120) hergestellt wird, Übertragen mindestens eines gruppenadressierten Frames (MSDU) als einen einzeln adressierten Frame (A-MSDU) an die Nicht-AP-MLD (120) umfasst.

11. MLD (120, 102) nach einem der Ansprüche 1 und 3-7, wobei die MLD (120, 102) eine Nicht-AP-MLD (120) ist, die mehrere zugeordnete STAs (STA1, ..., STAn) umfasst; wobei das Durchführen der DMS-Prozedur Bekanntgeben derselben DMS-Fähigkeit durch die mehreren STAs (STA1, ..., STAn) umfasst.

12. Nichtflüchtiges computerlesbares Medium, das computerausführbare Anweisungen speichert, die bei Ausführung durch einen oder mehrere Prozessoren dazu führen, dass Operationen durchgeführt werden, die Folgendes umfassen:
Durchführen, durch eine Mehrfachverbindungsvorrichtung, MLD, (120, 102), einer Prozedur gerichteter Multicast-Dienste, DMS, mit einer anderen Mehrfachverbindungsvorrichtung, MLD (102, 120); und
Anwenden der DMS-Prozedur auf der MLD-Ebene anstatt auf einer Stationsvorrichtungs-, STA-, Ebene, wobei das Anwenden der DMS-Prozedur auf der MLD-Ebene beinhaltet, dass die DMS-Prozedur zwischen der MLD (120, 102) und der anderen MLD (102, 120) hergestellt wird, dass einige oder alle gruppenadressierten Frames als einzeln adressierter Frame durch eine erste MLD der MLD und der anderen MLD, die eine Zugangspunkt(Access Point)-, AP-, MLD (102) ist, an eine zweite MLD der MLD und der anderen MLD, die eine Nicht-AP-MLD (120) ist, übertragen werden, und dass diese einzeln adressierten Frames auf einer beliebigen Verbindung (Link1, ..., Linkn) gesendet werden, auf der sich die der Nicht-AP-MLD (120) zugeordnete STA in einem Wachzustand befindet.

13. Nichtflüchtiges computerlesbares Medium nach Anspruch 12, wobei das Durchführen der DMS-Prozedur Aushandeln der DMS-Prozedur mit der anderen MLD (102, 120), die eine Nicht-Zugangspunkt(Access Point)-, AP-, MLD (120) ist, umfasst.

14. Verfahren, umfassend:
Durchführen, durch einen oder mehrere Prozessoren einer Mehrfachverbindungsvorrichtung, MLD, (120, 102), einer Prozedur gerichteter Multicast-Dienste, DMS, mit einer anderen Mehrfachverbindungsvorrichtung, MLD, (102, 120); und
Anwenden der DMS-Prozedur auf der MLD-Ebene anstatt auf einer Stationsvorrichtungs-, STA-, Ebene, wobei das Anwenden der DMS-Prozedur auf der MLD-Ebene beinhaltet, dass die DMS-Prozedur zwischen der MLD (120, 102) und der anderen MLD (102, 120) hergestellt wird, dass einige oder alle gruppenadressierten Frames als einzeln adressierter Frame durch eine erste MLD der MLD und der anderen MLD, die eine Zugangspunkt(Access Point)-, AP-, MLD (102) ist, an eine zweite MLD der MLD und der anderen MLD, die eine Nicht-AP-MLD (120) ist, übertragen werden, und dass diese einzeln adressierten Frames auf einer beliebigen Verbindung (Link1, ..., Linkn) gesendet werden, auf der sich die der Nicht-AP-MLD (120) zugeordnete STA in einem Wachzustand befindet.

15. Verfahren nach Anspruch 14, wobei das Durchführen der DMS-Prozedur Aushandeln der DMS-Prozedur mit der anderen MLD (102, 120), die eine Nicht-Zugangspunkt(Access Point)-, AP-, MLD (120) ist, umfasst.

## Revendications

1. Dispositif à liaisons multiples, MLD, (120, 102) configuré pour exécuter une procédure de services de multidiffusion dirigée, DMS, avec un autre MLD (102, 120), le MLD (120, 102) comprenant des circuits de traitement (206) couplés à une mémoire (208), les circuits de traitement (206) étant configurés pour :
exécuter la procédure DMS avec l'autre MLD (102, 120) ; et
appliquer la procédure DMS au niveau du MLD plutôt qu'au niveau d'un dispositif de station, STA,
où l'application de la procédure DMS au niveau du MLD comprend que la procédure DMS est établie entre le MLD (120, 102) et l'autre MLD (102, 120), que certaines ou toutes les trames adressées en groupe sont transportées sous forme de trames adressées individuellement par un premier MLD du MLD et l'autre MLD, étant un MLD de point d'accès, AP, (102) vers un deuxième MLD parme le MLD et l'autre MLD, étant un MLD non AP (120), et que ces trames adressées individuellement sont transmises sur n'importe quelle liaison (Link1, ..., Linkn) sur laquelle le MLD non AP (120) a sa STA affiliée dans un état d'éveil.

2. MLD (120, 102) selon la revendication 1, dans lequel l'exécution de la procédure DMS comprend la négociation de la procédure DMS avec l'autre MLD (102, 120) étant un MLD non AP (120).

3. MLD (120, 102) selon la revendication 1, dans lequel le MLD (102, 120) est configuré pour indiquer sa capacité en établissant un champ DMS d'un élément de capacités étendues à 1.

4. MLD (120, 102) selon l'une quelconque des revendications 1 à 3, comprenant en outre un émetteur-récepteur (210) configuré pour émettre et recevoir des signaux sans fil.

5. MLD (120, 102) selon la revendication 4, comprenant en outre une antenne (201) couplée à l'émetteur-récepteur (210) pour causer l'envoi d'une trame.

6. MLD (120, 102) selon l'une quelconque des revendications 1 et 3 à 5, dans lequel l'exécution de la procédure DMS comprend d'annoncer la même capacité DMS par toutes les STA (STA1, ..., STAn) affiliées à l'autre MLD (102, 120).

7. MLD (120, 102) selon l'une quelconque des revendications 1 et 3 à 6, dans lequel l'exécution de la procédure DMS comprend de définir le champ DMS de l'élément de capacités étendues à 1 pour une transmission par des STA affiliées (STA1, ..., STAn) du MLD (102, 120).

8. MLD (120, 102) selon la revendication 1, dans lequel l'exécution de la procédure DMS comprend une négociation de la procédure DMS au niveau du MLD entre un MLD non AP et un MLD AP ; et où le MLD (120, 102) est l'un parmi le MLD non AP (120) ou le MLD AP (102).

9. MLD (120, 102) selon l'une quelconque des revendications 1 et 8, dans lequel l'exécution de la procédure DMS comprend la transmission de l'un quelconque parmi une trame de demande DMS, une trame de réponse DMS, un élément de demande DMS, un élément de réponse DMS au niveau MLD.

10. MLD (120, 102) selon l'une quelconque des revendications 1 et 2, le MLD (120, 102) étant un MLD AP (102) ; où l'exécution de la procédure DMS comprend, lorsque la procédure DMS est établie entre le MLD (102) et un MLD non AP (120), le transport d'au moins une trame adressée de groupe (MSDU) en tant que trame adressée individuellement (A-MSDU) au MLD non AP (120).

11. MLD (120, 102) selon l'une quelconque des revendications 1 et 3 à 7, le MLD (120, 102) étant un MLD non AP (120) comprenant une pluralité de STA affiliées (STA1, ..., STAn) ; où l'exécution de la procédure DMS comprend d'annoncer la même capacité DMS par la pluralité de STA (STA1, ..., STAn).

12. Support non transitoire lisible par ordinateur stockant des instructions exécutables par ordinateur qui, lorsqu'elles sont exécutées par un ou plusieurs processeurs, entraînent l'exécution d'opérations comprenant les étapes suivantes :
exécuter, par un dispositif à liaisons multiples, MLD (120, 102) une procédure de services de multidiffusion dirigée, DMS, avec un autre dispositif à liaisons multiples, MLD (102, 120) ; et
appliquer la procédure DMS au niveau du MLD plutôt au niveau d'un dispositif de station, STA, où l'application de la procédure DMS au niveau du MLD comprend que la procédure DMS est établie entre le MLD (120, 102) et l'autre MLD (102, 120), que certaines ou toutes les trames adressées en groupe sont transportées sous forme d'une trame adressée individuellement par un premier MLD du MLD et l'autre MLD, étant un MLD de point d'accès, AP, (102) vers un deuxième MLD parme le MLD et l'autre MLD, étant un MLD non-AP (120), et que ces trames adressées individuellement sont transmises sur n'importe quelle liaison (Link1, ..., Linkn) sur laquelle le MLD non AP (120) a sa STA affiliée dans un état d'éveil.

13. Support non transitoire lisible par ordinateur selon la revendication 12, dans lequel l'exécution de la procédure DMS comprend la négociation de la procédure DMS avec l'autre MLD (102, 120) étant un MLD non AP (120).

14. Procédé comprenant les étapes suivantes :
exécuter, par un ou plusieurs processeurs un dispositif à liaisons multiples, MLD (120, 102) une procédure de services de multidiffusion dirigée, DMS, avec un autre dispositif à liaisons multiples, MLD (102, 120) ; et
appliquer la procédure DMS au niveau du MLD plutôt au niveau d'un dispositif de station, STA, où l'application de la procédure DMS au niveau du MLD comprend que la procédure DMS est établie entre le MLD (120, 102) et l'autre MLD (102, 120), que certaines ou toutes les trames adressées en groupe sont transportées sous forme d'une trame adressée individuellement par un premier MLD du MLD et l'autre MLD, étant un MLD de point d'accès, AP, (102) vers un deuxième MLD parme le MLD et l'autre MLD, étant un MLD non-AP (120), et que ces trames adressées individuellement sont transmises sur n'importe quelle liaison (Link1, ..., Linkn) sur laquelle le MLD non AP (120) a sa STA affiliée dans un état d'éveil.

15. Procédé selon la revendication 14, dans lequel l'exécution de la procédure DMS comprend la négociation de la procédure DMS avec l'autre MLD (102, 120) étant un MLD non AP (120).
